# EUROPEAN PATENT APPLICATION

(11) **EP 4 451 725 A1**
(43) Date of publication of application: **23.10.2024**
(21) Application number: 22907230.1
(22) Date of filing: 01.12.2022
(51) Int. Cl.: H04W 24/02, H04B 7/06, H04B 7/08, H04W 16/28, H04W 28/16

(54) **TERMINAL DEVICE, COMMUNICATION DEVICE, AND COMMUNICATION METHOD**

(30) Priority: 15.12.2021 JP 2021203723
(71) Applicant: Sony Group Corporation, Tokyo 108-0075 (JP)
(72) Inventor: SHIMEZAWA Kazuyuki, Tokyo 108-0075 (JP); UCHIYAMA Hiromasa, Tokyo 108-0075 (JP); KUSASHIMA Naoki, Tokyo 108-0075 (JP)
(74) Representative: Witte, Weller & Partner Patentanwälte mbB
(86) International application number: PCT/JP2022/044403
(87) International publication number: WO 2023/112702

(57) **Abstract**

High communication efficiency such as a high speed or a large capacity in a space in which a plurality of communication nodes having small communication coverage is two-dimensionally or three-dimensionally arranged is to be achieved.

A terminal device according to the present disclosure is a terminal device capable of communicating with a plurality of communication devices having at least one antenna port, and includes a transceiver and a processor. The processor acquires first antenna port set information that includes a plurality of first antenna ports associated with at least two different QCLs and second antenna port set information that includes a plurality of second antenna ports associated with at least two different QCLs, and transmits or receives at least one of a signal or a channel on the basis of one of the plurality of first antenna ports included in the first antenna port set information or the plurality of second antenna ports included in the second antenna port set information.

## Description

### TECHNICAL FIELD

The present disclosure relates to a terminal device, a communication device, and a communication method.

### BACKGROUND ART

In the fifth generation mobile communication system, or so-called 5G, communication is controlled in units of spaces based on the communicable range (communication coverage) of one base station called a cell. In the sixth generation mobile communication system, or so-called 6G, for which standardization is expected to be started in the future, operations in high-frequency bands such as terahertz waves are also expected in addition to conventional millimeter waves. Since communication in such a high-frequency band has a shorter propagation distance than that in a low-frequency band, the communication area is smaller than the communication area assumed in mobile communication systems of 5G and previous generations.

In 5G so far, to supplement communication coverage, use of overhanging antennas called transmission and reception points (TRPs), in addition to base stations (such as eNodeB and gNodeB), has been considered. Further, use of communication nodes such as integrated access and backhaul (IAB) nodes (which are base station relays) or a non-terrestrial network (NTN) including satellite communication has also been considered.

In 6G, which is the next generation, it is expected that diversification of communication nodes will be further promoted to cope with high-frequency bands and lower the capital expenditure (CAPEX)/operating expense (OPEX). For example, smart repeaters called reconfigurable intelligent surfaces (RISs), terminal-to-terminal relays, and the like are expected to be used.

These communication nodes that are expected to be used in the future include various communication nodes, such as communication nodes that are sufficiently controllable like base stations and IAB nodes, communication nodes that are uncontrollable like radio frequency (RF) repeaters, and communication nodes in which only some of the control items are controllable.

When the communication coverage is narrowed due to an operation in a high-frequency band, the number of communication nodes increases in order to planarly develop the communication area, and therefore, it is very difficult to design cells in a conventional manner. The above-mentioned diversification of communication nodes also adds to the difficulty of cell design.

Non-Patent Document 1 below discloses clustering a plurality of reflectors dispersedly disposed in a transmission space between a transmitter station and a receiver station to generate a cluster of reflectors to be used, and performing communication between the transmitter station and the receiver station via the cluster. As a method for selecting the reflectors to be clustered, selecting the reflectors on the basis of received power is disclosed.

However, the preferable cluster varies depending on conditions such as the state of the transmitter station, the type of the data to be transmitted and received, and the processing contents of the control to be performed on the transmitter station. Non-Patent Document 1 does not disclose any method for adaptively performing clustering while reflecting such conditions.

### CITATION LIST

### NON-PATENT DOCUMENT

Non-Patent Document 1: Tomoki MURAKAMI, Riku OHMIYA, Masashi IWABUCHI, and Tomoaki Ogawa, "Intelligent radiowave design for communication quality enhancement", IEICE Tech. Rep, Institute of Electronics, Information and Communication Engineers, IEICE-RCS2021-89, IEICE-121, no. 103, pp. 61-66

### SUMMARY OF THE INVENTION

### PROBLEMS TO BE SOLVED BY THE INVENTION

The present disclosure provides a terminal device, a communication device, and a communication method that achieve high communication efficiency such as a high speed or a large capacity in a space in which a plurality of communication nodes having small communication coverage is two-dimensionally or three-dimensionally arranged.

### SOLUTIONS TO PROBLEMS

A terminal device according to the present disclosure is a terminal device capable of communicating with a plurality of communication devices having at least one antenna port, and includes a transceiver and a processor. The processor acquires first antenna port set information including a plurality of first antenna ports associated with at least two different QCLs and second antenna port set information including a plurality of second antenna ports associated with at least two different QCLs, and transmits or receives at least one of a signal or a channel on the basis of one of the plurality of first antenna ports included in the first antenna port set information or the plurality of second antenna ports included in the second antenna port set information.

### BRIEF DESCRIPTION OF DRAWINGS

Fig. 1 is a diagram illustrating an example of a cellular mobile communication network according to the present disclosure.
Fig. 2 is a diagram illustrating an example in which a plurality of communication nodes is clustered.
Fig. 3 is a diagram illustrating an example in which a terminal device is connected to a core network via a cluster.
Fig. 4 is a diagram illustrating the configuration of a network architecture of a 5G system (5GS).
Fig. 5 is a block diagram illustrating an example of a base station device as a communication device according to the present embodiment.
Fig. 6 is a block diagram illustrating an example of a terminal device as a communication device according to the present embodiment.
Fig. 7 is a diagram for explaining a clustering method 1A.
Fig. 8 is a sequence diagram illustrating an example of operations according to the clustering method 1A.
Fig. 9 is a diagram illustrating an example in which a terminal device switches clusters.
Fig. 10 is a sequence diagram illustrating another example of operations according to the clustering method 1A.
Fig. 11 is a diagram for explaining a clustering method 1B.
Fig. 12 is a diagram illustrating an example in which a terminal device communicates with a subcluster.
Fig. 13 is a diagram illustrating an example in which a terminal device switches subclusters.
Fig. 14 is a sequence diagram illustrating an example of operations according to a clustering method 2A.
Fig. 15 is a sequence diagram illustrating another example of operations according to the clustering method 2A.
Fig. 16 is a diagram for explaining a clustering method 2B.
Fig. 17 is a diagram for explaining a clustering method 3A.
Fig. 18 is a diagram for explaining a clustering method 3B.
Fig. 19 is a diagram illustrating an example in which some of the antenna ports in one communication node are activated.
Fig. 20 is a sequence diagram illustrating an example of an operation in which a network (a communication device) determines a cluster.
Fig. 21 is a sequence diagram illustrating another example of an operation in which a network (a communication device) determines a cluster.
Fig. 22 is a sequence diagram illustrating yet another example of an operation in which a network (a communication device) determines a cluster.
Fig. 23 is a sequence diagram illustrating an example of an operation in which a terminal device determines a cluster.
Fig. 24 is a sequence diagram illustrating another example of an operation in which a terminal device determines a cluster.

### MODE FOR CARRYING OUT THE INVENTION

In the description below, embodiments of the present disclosure are explained with reference to the drawings. In the drawings, the same or corresponding components are denoted by the same reference numerals, and detailed explanation thereof will be omitted as appropriate, except for modified or extended processes. In one or more embodiments described in the present disclosure, components included in the respective embodiments can be combined with each other, and the combined resultant also forms part of an embodiment described in the present disclosure.

### <Outline of Clustering>

In the present embodiment, in a space (a communication environment) formed by arranging a plurality of communication nodes each forming a communication coverage, a terminal device or a communication device (a base station device or the like) clusters one or more communication nodes (such as cells, gNBs (base station devices), xNBs (base station devices), transmission and reception points (TRPs), antenna ports, sets of antenna ports, IAB nodes, relay UEs, or beams) (clustering). A terminal device corresponds to a device such as user equipment (UE) of 5G or a next generation standard (New Generation: NG). A base station device corresponds to a 5G gNB or an NG xNodeB (xNB), for example. An xNB is an xth-generation Node Base station. Clustering is to select one or more communication nodes or candidates to be connected by a terminal device, and set them as one group (described later in detail). A group generated by clustering is called a cluster. Therefore, a generated cluster includes one or more communication nodes. The terminal device is connected to the generated cluster, or is connected to the clustered communication nodes, and performs transmission and reception with each communication node. The clustering is also called communication node clustering or node clustering.

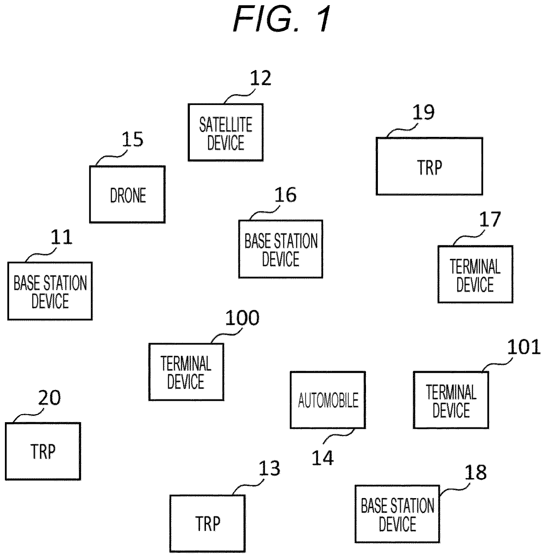

Fig. 1 is a diagram illustrating an example of a cellular mobile communication network according to the present disclosure. Two terminal devices 100 and 101, and a plurality of communication devices (communication nodes) 11 to 19 installed on the ground or in the air constitute a communication network. The communication nodes may be moving objects or stationarily installed devices. As the plurality of communication nodes, base station devices 11, 16, and 18, TRPs 13, 19, and 20, a satellite device 12, an automobile 14, a drone 15, and a terminal device 17 are shown. The communication nodes 11 to 19 may function as a relay for the core network. The communication nodes 11 to 19 have a function of connecting as an access network from the terminal devices, and may further have a function of relaying to other communication nodes. The communication nodes (communication devices) may be nodes of an Integrated Access and Backhaul (IAB) network that is used in the fifth generation mobile communication system (5G), or devices having functions equivalent to those used in a next-generation mobile communication system.

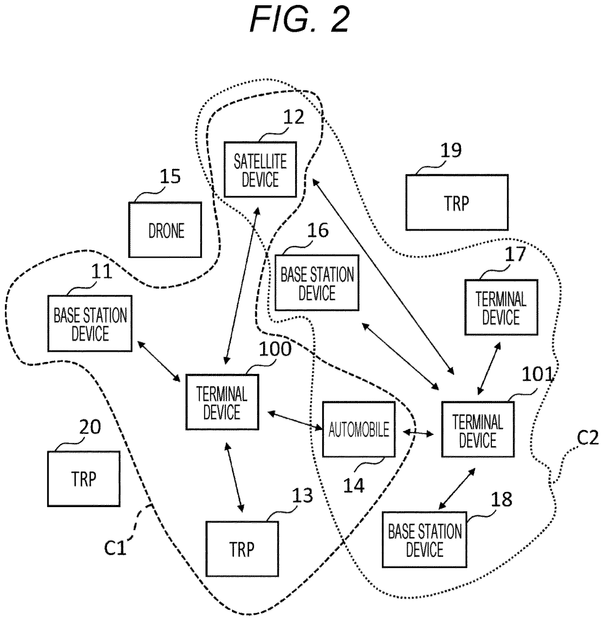

Fig. 2 illustrates an example of clustering of a plurality of communication nodes for the terminal device 100 and the terminal device 101. As will be described later, clustering may be performed by the terminal device 100 and the terminal device 101 in some cases, or may be performed by communication devices (communication nodes) such as base station devices in other cases. Here, explanation is made on the assumption that the terminal device 100 and the terminal device 101 perform clustering. The terminal device 100 generates a cluster C1 including the communication nodes 11 to 14 and 15 by clustering, and is connected to the cluster C1. The terminal device 101 generates a cluster C2 including the communication nodes 12 and 16 to 18, and is connected to the cluster C2. The clustering will be described later in detail.

There are cases where the terminal device 100 and the terminal device 101 recognize that clustering has been performed (non-transparent), cases where the terminal device 100 and the terminal device 101 do not recognize (transparent) it, and cases of a hybrid of the above. Also, there are cases where the terminal device 100 and the terminal device 101 recognize clustered communication nodes (non-transparent), cases where the terminal device 100 and the terminal device 101 do not recognize (transparent) it, and cases of a hybrid of the above. In a hybrid case, terminal devices recognize that some communication nodes are clustered (non-transparent), and do not recognize that the remaining communication nodes are clustered (transparent). Not recognizing that clustering has been performed corresponds to a situation where a terminal device does not grasp which communication node the terminal device is communicating with, for example. The presence/absence (transparency) of such recognition regarding clustering can be adaptively controlled in accordance with the state of the terminal, the type of the data, the contents of the control process, or the like.

The terminal devices 100 and 101 are connected to the core network via the clusters C1 and C2, and can further communicate with a wide area network such as the Internet.

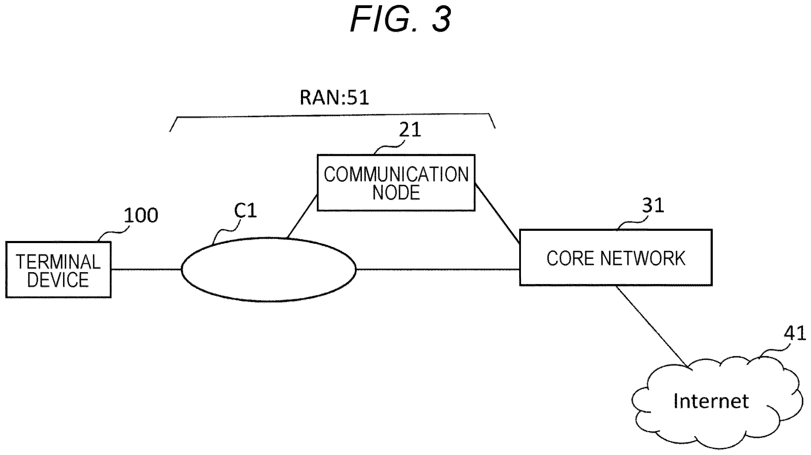

Fig. 3 illustrates an example in which the terminal device 100 is connected to a core network 31 via the cluster C1, and communicates with nodes on the Internet 41, which is a wide area network. The terminal device 100 may be connected to the core network 31 via one or more communication nodes 21 that do not belong to the cluster C1, in addition to the cluster C1. Here, the one or more communication nodes 21 not belonging to the cluster C1 may be communication nodes of a radio access technology (RAT) different from the cluster C1. For example, in a case where the cluster C1 is an RAT of the sixth generation cellular communication system, one or more communication nodes 21 that do not belong to the cluster C1 may be communication nodes of NR of the fifth generation cellular communication system or LTE (Evolved-UMTS Terrestrial Radio Access (E-UTRA)) of the fourth generation cellular communication system. The core network 31 is also called 5GC (5G CORE) or New Generation CORE (or New CORE or 6GC). The cluster C1 and the communication nodes 21 constitute a 5G radio access network (RAN) 51 (NGRAN, for example), or a next generation RAN (Further NGRAN, Evolved NGRAN (ENGRAN), or New RAN, for example).

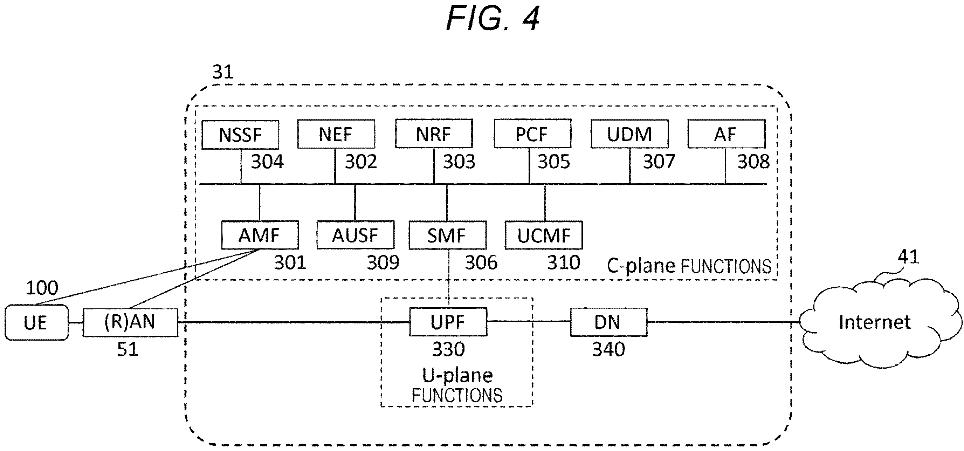

As an example, the core network 31 may be a network (5GC, for example) that adopts a 5G system (5GS). However, the core network 31 is not limited to this, and may be a core network of the sixth generation cellular communication system (6G Core, for example). The core network 31 may include a plurality of communication nodes. The plurality of communication nodes constituting the core network 31 may be roughly divided into U-Plane nodes and C-Plane nodes. One or a plurality of U-Plane nodes, and one or a plurality of C-Plane nodes may belong to one core network. A C-Plane node may be a node that performs access control or mobility control, or a node that manages a flow or a bearer, for example. Further or alternatively, a C-Plane node may be a node that manages subscriber information about a user. Note that Fig. 4 is a diagram illustrating the configuration of a 5G system (5GS) network architecture as an example. The 5GS includes a UE 1, a radio access network/access network (RAN) 51, and the core network 31. Here, the core network 31 is a 5GC (5G CORE) or a New CORE. The RAN may be a New RAN.

The function group of the control plane in Fig. 4 includes a plurality of network functions (NFs). The plurality of NFs includes an access and mobility management function (AMF) 301, a network exposure function (NEF) 302, a network repository function (NRF) 303, a network slice selection function (NSSF) 304, a policy control function (PCF) 305, a session management function (SMF) 306, a unified data management (UDM) 307, an application function (AF) 308, an authentication server function (AUSF) 309, and a UE radio capability management function (UCMF) 310. Each NF exchanges information with another NF via each service-based interface. The NFs 301 to 310 may be more generally referred to as C-Plane nodes.

The AMF 301 provides authentication, authorization, mobility management, and the like for terminal devices.

The NEF 302 has a function of disclosing each of the NFs constituting the 5GS to an external application.

The NRF 303 provides a necessary NF service discovery function, in response to a request from another NF.

The NSSF 304 has a function of selecting an SMF for each network slice. Network slices are units that divide the communication services provided by the 5G, and can provide each service in a communication form suitable for the service. For example, since communication characteristics (data rate, delay, and the like, for example) required for each service are different, necessary performance can be achieved with the use of a network slice suitable for the required communication characteristics.

The PCF 305 provides policy control to support quality of service (QoS). For example, the PCF 305 has a function of setting quality such as a speed and a delay time of the data transfer path to be used, on the basis of requirements from an application.

The SMF 306 provides session management for the terminal devices, allocation of IP addresses, selection and control of a UPF for data transfer, and the like.

The UDM 307 includes a unified data repository (UDR) that holds and manages subscriber information, and a front end (FE) unit that processes the subscriber information.

The AF 308 represents general network functions. The AF 308 can be integrated directly via the PCF 305, or indirectly via the NEF 302.

The AUSF 309 has a function of authenticating a subscriber/terminal device (UE), with respect to subscriber information stored in the UDM 307.

The UCMF 310 holds UE radio capability information corresponding to all UE radio capability IDs in a public land mobile network (PLMN). The UCMF 310 is responsible for assigning each PLMN-assigned UE radio capability ID.

A user plane function (UPF) 330 has a function of a user plane process, such as packet transfer of user data. The UPF 330 more generally corresponds to a U-Plane node.

A data network (DN) 340 has a function of enabling connection to the Internet 41, a service unique to a mobile network operator (MNO), or a third-party service.

The RAN 51 has a function of enabling connection to a radio access network (RAN) and connection to an access network (AN) other than the RAN. The RAN 51 includes a plurality of communication nodes such as base station devices. The RAN may be an NG RAN. Additionally or alternatively, the RAN may be called a Further Next Generation RAN (Further NGRAN or Evolved NGRAN (ENGRAN), for example), or a New RAN. Hereinafter, the RAN 51 and the core network 31 will be described by way of an example of a NGRAN and a 5GC, but, as described above, the RAN 51 and the core network 31 may be some other RATs, networks of another generation, or nodes.

Information is exchanged between the UE 100 and the AMF 301 via a reference point. Information is exchanged between the RAN 51 and the AMF 301 via a reference point. Information is exchanged between the SMF 306 and the UPF 330 via a reference point.

### <Explanation of Terms Related to the Present Disclosure>

Terms that are used in the description of the present embodiment are now explained.

### [Antenna Ports]

The antenna ports in the present disclosure are used to recognize whether or not propagation path characteristics are the same. For example, in the same antenna ports, it is recognized that the propagation path characteristics in one symbol are the same as the propagation path characteristics in another symbol (or can be estimated from the propagation path characteristics in another symbol). Meanwhile, it is recognized that different antenna ports have different propagation path characteristics, unless they are substantially at the same location or at a quasi co-location (QCL) as described later.

Also, an antenna port can associate a predetermined reference signal with a predetermined channel. The predetermined reference signal and the predetermined channel associated with each other can be regarded as having the same propagation path characteristics. Therefore, on the reception side, propagation path characteristics can be estimated from a predetermined reference signal, and a reception process can be performed on the predetermined channel associated with the predetermined reference signal on the basis of the estimated propagation path characteristics.

### [QCL(Quasi-co-location)]

Two antenna ports that satisfy a predetermined condition can be shown as being located at a quasi co-location (QCL). The predetermined condition is that global characteristics of a propagation channel carrying a symbol at one antenna port can be inferred from a propagation channel carrying a symbol at another antenna port. The global characteristics include at least one of a delay variance, a Doppler spread, a Doppler shift, an average gain, and a mean delay. In other words, in a case where an antenna port A and an antenna port B are at a QCL, the global characteristics of the propagation channel carrying the symbol at the antenna port A can be inferred from the propagation channel carrying the symbol at the antenna port B.

The QCL between antenna ports may be specified by a state of a predetermined indicator. For example, the QCL between antenna ports is specified by a state of a transmission configuration indicator (TCI) described below. The TCI state includes a parameter that sets the following QCL relationship:
a QCL relationship between a demodulation reference signal (DMRS) and a DMRS port (antenna port) of a PDSCH,
a QCL relationship between a demodulation reference signal (DMRS) and a DMRS port (antenna port) of a PDCCH, or
a QCL relationship between a demodulation reference signal (DMRS) and a CSI-RS port (antenna port) of a non-zero-power (NZP) channel state information reference signal (CSI-RS) resource.

The TCI state is defined by one of the following types (1) to (4).
(1) QCL-Type A: {Doppler shift, Doppler broadening, mean delay, or delay broadening}
(2) QCL-Type B: {Doppler shift or Doppler broadening}
(3) QCL-Type C: {Doppler broadening or mean delay}
(4) QCL-Type D: {Spatial Rx (Receiver or Reception) parameter}

A terminal device is informed (notified) of the TCI state (which is the state indicating the QCL relationship among a plurality of antenna ports) by signaling of downlink control information (DCI), a medium access control control element (MAC CE), or radio resource control (RRC). In other words, information indicating the TCI state (which is the state indicating the QCL relationship among a plurality of antenna ports) is transmitted from at least one of the communication nodes 11 to 20 to the terminal device 100 or 101. Information indicating the TCI state (which is the state indicating the QCL relationship among the plurality of antenna ports) can be included in downlink control information (DCI), a medium access control control element (MAC CE), or a radio resource control (RRC) message transmitted from at least one of the communication nodes 11 to 20 to the terminal device 100 or 101. Specifically, the terminal device 100 or 101 receives information regarding activation/deactivation of the TCI state in a PDSCH specific to the terminal device from at least one of the communication nodes 11 to 20 through a MAC CE (L2 signaling), for example. The terminal device 100 or 101 receives a TCI state indication for the PDCCH specific to the terminal device, from at least one of the communication nodes 11 to 20 through the MAC CE. The terminal device 100 or 101 receives a TCI state indication for the PDSCH from at least one of the communication nodes 11 to 20 by DCI (L1 signaling). The reception through the MAC CE and the reception by DCI are examples, and the MAC CE may be replaced with RRC or DCI, and the DCI may be replaced with the MAC CE or the RRC. Note that the DCI and the MAC CE exist below the RRC (upper layer) in the protocol stack, and accordingly, high-speed operations are possible.

A downlink transmission beam (which is a predetermined signal with directivity (including non-directivity) transmitted from at least one of the communication nodes 11 to 20) is defined by a predetermined signal index and the quasi-co-location (QCL). For example, in a case where predetermined signals having the same index are in a QCL relationship, they may be handled as transmission beams of the same downlink. In a case where predetermined signals having the same index are not in a QCL relationship, they may be handled as transmission beams of different downlinks. Changing (switching) beams of a certain signal/channel corresponds to changing TCL states (QCL) of the signal/channel.

Examples of the predetermined signals include synchronization signal (SS)/physical broadcast channel (PBCH) blocks (SSB). For example, a plurality of SS/PBCH blocks having the same information with different indexes can be transmitted. SS/PBCH blocks with different indexes may be transmitted by different transmission beams. The TCI state between an SS/PBCH block with a predetermined index and the DMRS of another reference signal or a physical channel determines the relationship between the other reference signal and a beam of the physical channel. Note that the predetermined signals are not necessarily a SSB in 5G. The predetermined signals may be a combination of one or a plurality of synchronization signals or another signal (one of the reference signals described above) and a channel (physical channel) in 6G.

Further, another example of the predetermined signals is NZP CSI-RSs. A plurality of NZP CSI-RS resources is set. Different transmission beams may be transmitted at CSI-RS ports (antenna ports) of different CSI-RS resources. The TCI state between a CSI-RS port of a CSI-RS resource and a DMRS of another reference signal or a physical channel determines the relationship between the other reference signal and a beam of the physical channel.

### [Communication Nodes (Nodes)]

A communication node (node) may mean at least one or a combination of a cell, a gNB (base station device), an xNB (base station device), a transmission and reception point (TRP), an antenna port, a set of antenna ports, an IAB node, a relay UE, and a beam.

A communication node may be defined as a node that transmits a synchronization signal and/or broadcast information.

A communication node may be defined on the basis of a quasi-co-location (QCL). For example, a set of antenna ports at the same QCL may be recognized as one communication node or one cluster.

### [Clustering]

Clustering may be defined as setting one or more communication nodes to which a terminal device is connected at the same time, or candidates for communication nodes. Further or alternatively, clustering may mean setting one or a plurality of communication nodes or candidates for communication nodes assumed, expected, or considered simultaneously in a connected state (RRC connected, for example) with a terminal device, or being set by a configuration from a network (a RAN, for example).

Information regarding a quasi-co-location (QCL) may be set in each of one or more communication nodes to be clustered. For example, it is assumed that communication nodes are antenna ports, and a plurality of antenna ports is included in one cluster. In the cluster, the antenna ports included in the same communication device are at the same QCL (in a QCL relationship), and one or more antenna ports included in different communication devices are at different QCLs (not in a QCL relationship). In other words, a plurality of communication nodes at the same QCL (a plurality of communication nodes in a QCL relationship), and a plurality of communication nodes at different QCLs (a plurality of communication nodes not in a QCL relationship) may coexist in one cluster.

### [Clusters]

A cluster is a set (list) of clustered communication nodes.
- In a clustering method 1 described later, a cluster is a set of communication nodes (including a case with antenna ports; the same applies in the description below) that are set by RRC signaling.
- In clustering methods 2 and 3 described later, a cluster is a set of communication nodes that are set by RRC signaling, and is candidates for communication nodes that actually perform communication. Note that a communication node that actually performs communication among the candidates for communication nodes can be defined as a subcluster.

Additionally or alternatively, a cluster may be defined as a group of one or a plurality of elements or entities (communication nodes, for example) that can be assumed or considered as being simultaneously in time-frequency synchronization with a terminal device (UE).

Communication nodes that perform communication or a set of candidates for the communication nodes is not necessarily called a cluster, but may be defined by some other name. Examples of other names and explanation thereof are as follows.
- Node set
- Zone (area): A zone (area) is a spatial region that can be defined in accordance with a physical location, a virtual location, or the like. A zone may include a plurality of communication nodes.
- Cell set (cell): In a case where communication nodes are cells in particular, a set of communication nodes is called a cell set. Further, a cell set may also be simply called cells.
- Antenna port set: In a case where communication nodes are antenna ports in particular, a set of communication nodes is called an antenna port set.
- Beam set: In a case where communication nodes are beams, a set of communication nodes is called a beam set.

A unique identifier (cluster ID) can be assigned to each cluster.

A plurality of clusters can be set. The plurality of clusters may also be called a cluster set (cluster list). Also, a cluster that is set for a terminal device may be called a serving cluster. Likewise, a cluster set that is set for a terminal device may also be called a serving cluster set. Note that a node included in a certain cluster may also be included in another cluster. That is, one node can be included in a plurality of clusters.

Clusters may be switched by one or more communication devices (communication nodes included in the cluster, or a communication device that controls the cluster, for example) in a dynamic manner or a semi-static manner. Using clusters that are switched in a dynamic manner or a semi-static manner, a communication node in the clusters can communicate with the terminal device.

### <Configuration of a Communication Device (a Base Station Device or the Like)>

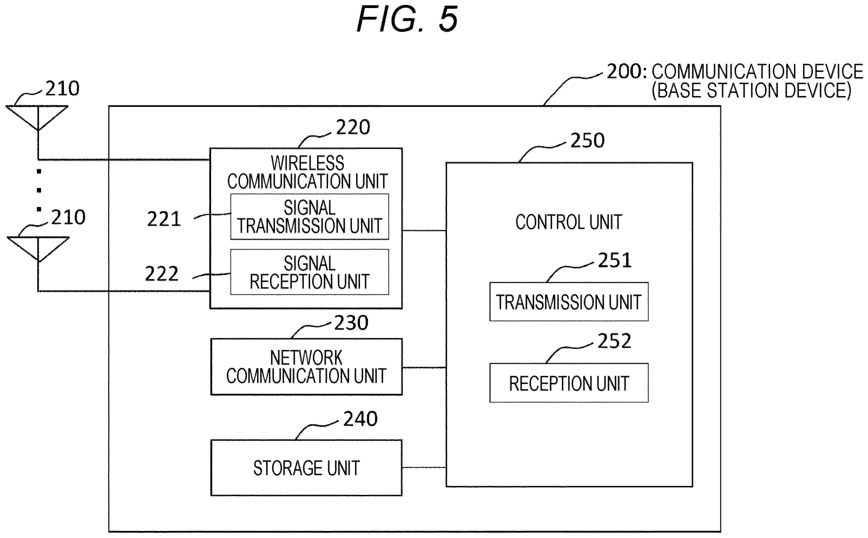

Fig. 5 is a block diagram illustrating an example of a communication device 200 according to the present embodiment. The communication device 200 is a network-side device, and, for example, is a communication device such as a base station device, a communication node, or a core network. The communication device 200 may be a communication device having functions as a control device for a terminal device. In the case described below, the communication device 200 is assumed to be a base station device. Although the terminal device that is the communication target of the communication device 200 is the terminal device 100 in the case described below, similar operations can be performed in a case with another terminal device.

In a case where the communication device 200 is a base station device or one of the communication nodes described above, the communication device 200 includes one or a plurality of antennas 210, a wireless communication unit 220 (a transceiver), a network communication unit 230, a storage unit 240, and a control unit 250. Each of the wireless communication unit 220, the network communication unit 230, and the control unit 250 is formed with a processor (hardware processor) such as a central processing unit (CPU) or a micro-processing unit (MPU), or a processor or an integrated circuit such as an application-specific integrated circuit (ASIC) or a field-programmable gate array (FPGA), for example. The storage unit 240 is formed with any appropriate recording medium such as a memory, a hard disk device, an optical disk, or a magnetic recording device. The memory may be a volatile memory or a nonvolatile memory.

Each antenna 210 may or may not correspond to an antenna port. That is, antenna ports are, as described above, for determining whether propagation path characteristics in one symbol can be regarded as the same as the propagation path characteristics in another symbol (or can be inferred from the propagation path characteristics in another symbol), and may not have one-to-one correspondence with physical antennas. Each antenna 210 emits a signal that is output from the wireless communication unit 220, into space as a radio wave. Each antenna 210 converts a radio wave in space into a signal, and outputs the signal to the wireless communication unit 220. Each antenna 210 may be an array antenna including a plurality of antenna elements. In this case, each antenna 210 may adjust the weight of the antenna elements to form a beam (a transmission beam or a reception beam).

The wireless communication unit 220 transmits and receives signals via the respective antennas 210. A signal includes data or information. The wireless communication unit 220 includes a signal transmission unit 221 that transmits a signal, and a signal reception unit 222 that receives a signal. For example, the signal transmission unit 221 transmits a downlink signal to the terminal device 100, and the signal reception unit 222 receives an uplink signal from the terminal device 100. The wireless communication unit 220 may form a plurality of beams with the antennas 210, and communicate with the terminal device 100.

The network communication unit 230 transmits and receives information to and from other nodes. For example, the network communication unit 230 transmits information to other nodes, and receives information from other nodes. The other nodes include at least one of a terminal device, another base station device, another communication node, the core network 31, or a node on the Internet 41, for example.

The storage unit 240 temporarily or permanently stores a program and data for operations of the communication device 200. The storage unit 240 also temporarily or permanently stores information regarding the terminal device 100 as the communication target and the other communication nodes.

The control unit 250 includes a reception unit 252 and a transmission unit 251. The reception unit 252 of the control unit 250 receives data or information from the terminal device via the wireless communication unit 220. The transmission unit 251 of the control unit 250 transmits data or information for the terminal device via the wireless communication unit 220.

The control unit 250 controls operations of the entire communication device 200, to provide various functions of the communication device 200.

The control unit 250 acquires information regarding the terminal device 100 and one or a plurality of other communication nodes. The other communication nodes include a plurality of communication nodes that are present in a range in which the terminal device 100 can detect radio waves, for example. Alternatively, the other communication nodes may be at least one or all of the communication nodes in a predetermined area, or may be at least one or all of the communication nodes belonging to the same operator as the communication device 200 in the area.

As an example of the information to be acquired by the control unit 250, there is information regarding the communication quality of the propagation path between the terminal device 100 and one or a plurality of other communication nodes. The control unit 250 acquires information about communication quality from the terminal device 100 or one or a plurality of other communication nodes. The control unit 250 may transmit an instruction to measure communication quality (MeasConfig, for example) and an instruction to report to the terminal device 100 or one or a plurality of other communication nodes (ReportConfig, for example), and acquire information about communication quality (Measurement Report, for example) as a response to the instructions. Examples of communication quality include reference signal received power (RSRP), reference signal received quality (RSRQ), and received signal strength indicator (RSSI). The control unit 250 may also receive information regarding the specifications and capabilities of the terminal device 100 or one or a plurality of other communication nodes, from the terminal device 100 or the one or the plurality of other communication nodes.

Further, the control unit 250 may receive information regarding the QCL setting in one or a plurality of other communication nodes, from the one or the plurality of other communication nodes. For example, in a plurality of antenna ports in another communication node, information regarding two or more antenna ports for which a first QCL is set, and information regarding two or more antenna ports for which a second QCL is set may be transmitted from the one or the plurality of other communication nodes, and the control unit 250 may receive the information.

The control unit 250 performs clustering on the terminal device 100 for the communication device 200 (the subject communication node) and other communication nodes, on the basis of the acquired information. As a result, a cluster including a plurality of communication nodes with which the terminal device 100 communicates (in a communicable state, for example), or a cluster including candidates for the communication nodes with which the terminal device 100 communicates is generated. One or a plurality of clusters is generated. In a case where the clustering targets are the antenna ports included in the respective communication nodes, a plurality of first antenna ports (a first antenna port set) associated with at least two different QCLs may be defined as a first cluster. Further, a plurality of second antenna ports (a second antenna port set) associated with at least two different QCLs may be defined as a second cluster.

The control unit 250 transmits, to the terminal device 100, control information for designating at least one of the generated one or more clusters as the cluster(s) for transmitting or receiving at least one of a signal and a channel (hereinafter referred to as "signal/channel") or the candidates for the cluster(s). For example, the control information is included in an RRC message, a MAC CE, or DCI, or is transmitted by a combination of at least two of them. In a case where clustering is performed on antenna ports as communication nodes, first antenna port set information including the first antenna port set and/or second antenna port set information including the second antenna port set is transmitted as the control information to the terminal device 100. For example, the control information is included in an RRC message, a MAC CE, or DCI, or is transmitted by a combination of at least two of them. A signal/channel may be a predetermined signal (the synchronization signal or reference signal (a CSI-RS, for example)) or a predetermined channel (a PBCH, a PDCCH, a PUCCH, a PDSCH, or a PUSCH, for example).

In a case where the control unit 250 transmits control information designating a plurality of clusters (including a case with antenna port sets), the control unit 250 may separately transmit control information designating which cluster the terminal device 100 is to actually use (using DCI, for example). Alternatively, the terminal device 100 may determine the cluster to be actually used. The determination method may be any method, and a cluster may be selected on the basis of the communication quality of the cluster, or a cluster may be randomly selected in some cases.

The control unit 250 may transmit the control information including the information regarding the generated one or more clusters by higher-layer signaling (RRC signaling, for example).

The control unit 250 may transmit activation information as control information to the terminal device 100, the activation information designating the communication node to be actually used among all the communication nodes included in the cluster reported to the terminal device 100, or designating the communication node to be activated. As a result, the control unit 250 causes the terminal device 100 to transmit or receive a signal/channel, using the communication node designated by the activation information. The control unit 250 may select which communication node is to be activated, as desired. For example, a predetermined number of communication nodes with high communication quality may be selected, or a predetermined number of communication nodes may be randomly selected at regular time intervals.

In a case where the clustering target is an antenna port, for example, the control unit 250 transmits, to the terminal device 100, activation information indicating the antenna port to be activated in the first antenna port set or the second antenna port set. The control unit 250 designates, in the terminal device 100, the antenna port designated by the activation information as the antenna port for transmitting or receiving a signal/channel.

The control unit 250 may transmit the activation information (control information) by lower-layer signaling. Examples of the lower-layer signaling include L1 signaling (DCI, a PDCCH, or the like) and L2 signaling (MAC CE signaling).

The operations related to clustering in the control unit 250 described above are an example, and more specific operations will be described later. In some cases, instead of the base station device 200 or together with the base station device 200, the terminal device 100 performs the operations related to clustering. In a case where the terminal device 100 performs clustering, the control unit 250 of the base station device 200 can receive control information including a clustering result (information regarding one or more clusters, for example) from the terminal device 100. In a case where information about a plurality of clusters is received as a clustering result from the terminal device 100, the control unit 250 may determine the cluster to be used for actual communication from among the plurality of clusters, and transmit control information designating the determined cluster to the terminal device 100. The control unit 250 may control a communication node included in the cluster to perform communication with the terminal device 100 (to transmit or receive a signal/channel, for example). The communication may include beam transmission or beam reception.

### <Configuration of a Terminal Device>

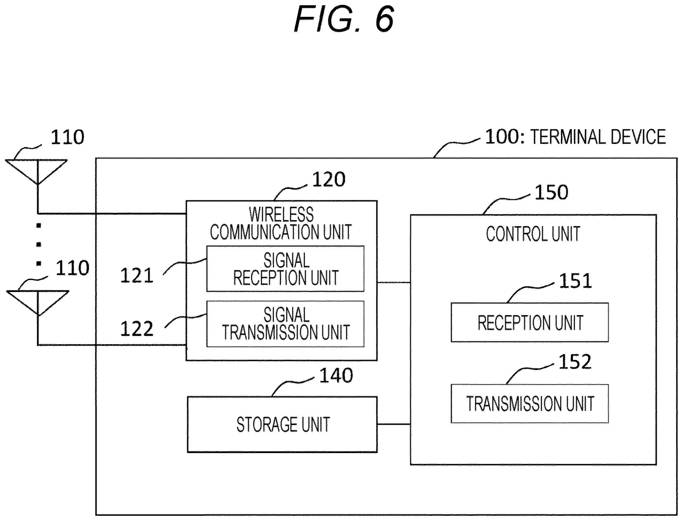

Fig. 6 is a block diagram illustrating an example of the terminal device 100 as a communication device according to the present embodiment. The other terminal devices (terminal device 101 and the like) in Fig. 1 also have the configuration illustrated in Fig. 6. The terminal device 100 includes one or a plurality of antennas 110, a wireless communication unit 120 (a transceiver), a storage unit 140, and a control unit 150. Each of the wireless communication unit 120 and the control unit 150 is formed with a processor or an integrated circuit such as a central processing unit (CPU), a micro-processing unit (MPU), an application-specific integrated circuit (ASIC), or a field-programmable gate array (FPGA), for example. The storage unit 140 is formed with any appropriate recording medium such as a memory, a hard disk device, an optical disk, or a magnetic recording device. The memory may be a volatile memory or a nonvolatile memory.

The antennas 110 emit a signal that is output from the wireless communication unit 120, into space as a radio wave. The antennas 110 convert a radio wave in space into a signal, and output the signal to the wireless communication unit 120. The antennas 110 may be array antennas each including a plurality of antenna elements. In this case, each antenna 110 may adjust the weight of the antenna elements to form a beam (a transmission beam or a reception beam).

The wireless communication unit 120 transmits and receives signals. A signal includes data or information. The wireless communication unit 120 includes a signal transmission unit 121 that transmits a signal, and a signal reception unit 122 that receives a signal. For example, the signal reception unit 122 receives a downlink signal from the communication device 200 or another communication node (including a case with a cluster or an antenna port set; the same applies in the description below). The signal transmission unit 121 transmits an uplink signal to the communication device 200 or another communication node. The wireless communication unit 120 can form a plurality of beams with the antennas 110, to communicate with the communication device 200 or another communication node.

The storage unit 140 temporarily or permanently stores a program and various kinds of data for operations of the terminal device 100. The storage unit 140 may store information regarding the communication device 200 or other communication nodes.

The control unit 150 includes a reception unit 152 and a transmission unit 151. The reception unit 152 receives data or information from the communication device 200 or another communication node via the wireless communication unit 120. The transmission unit 151 transmits data or information for the communication device 200 or another communication node via the wireless communication unit 220.

The control unit 150 of the terminal device 100 controls operations of the entire terminal device 100, to provide various functions of the terminal device 100.

The control unit 150 receives, from the communication device 200, control information (information regarding one or more clusters) designating one or more clusters including one or more communication nodes that transmit or receive signals/channels. The control unit 150 may receive the control information by higher-layer signaling (RRC signaling, for example).

The control unit 150 can separately receive, from the communication device 200, control information designating which cluster among a plurality of clusters is to be used for actual communication. In this case, the control unit 150 transmits or receives a signal/channel, using the communication nodes included in the designated cluster or one of the communication nodes. The control unit 150 may receive the control information designating the cluster to be actually used among a plurality of clusters by lower-layer signaling (L1 signaling, L2 signaling, or the like) or by higher-layer signaling.

In a case where clustering is performed on antenna ports as communication nodes, the control unit 150 receives control information that includes first antenna port set information including a plurality of first antenna ports and/or second antenna port set information including a plurality of second antenna ports. The plurality of first antenna ports corresponds to the first antenna port set, and the plurality of second antenna ports corresponds to the second antenna port set.

The first antenna port set includes two or more antenna ports for which the first QCL is set among a plurality of antenna ports in one or more communication nodes with which the terminal device 100 can communicate (can detect radio waves, for example). The second antenna port set includes two or more antenna ports for which the second QCL is set among the plurality of antenna ports in the one or more communication nodes.

The control unit 150 transmits or receives a signal/channel, on the basis of at least part of the first antenna port set or at least part of the second antenna port set. The control unit 150 can separately receive, from the communication device 200, control information designating which one of the first antenna port set and the second antenna port set is to be actually used. In this case, the control unit 150 transmits or receives a signal/channel, using the designated antenna port set.

The control unit 150 can receive activation information as control information, the activation information designating the communication node to be actually used among all the communication nodes included in the cluster, or designating the communication node to be activated. In this case, the control unit 150 transmits or receives a signal/channel, using the communication node designated by the activation information. The control unit 150 can receive the activation information by lower-layer signaling. The lower-layer signaling includes L1 signaling (DCI, a PDCCH, or the like), L2 signaling (MAC CE signaling), or the like.

In a case where clustering is performed on antenna ports as communication nodes, the control unit 150 receives activation information indicating the antenna port to be activated in the first antenna port set or the second antenna port set. The control unit 150 sets the antenna port designated by the activation information as the antenna port that transmits or receives a signal. That is, the control unit 150 selects at least one of the antenna ports of the first antenna port set or at least one of the antenna ports of the second antenna port set, on the basis of the activation information. The control unit 150 transmits or receives a signal, on the basis of the selected antenna port.

The control unit 150 may have a function of performing clustering of communication nodes in the terminal device 100. The control unit 150 may receive or acquire information regarding one or a plurality of communication nodes from the one or the plurality of communication nodes. For example, the one or the plurality of communication nodes includes a plurality of communication nodes in a range in which the terminal device 100 can perform communication (for example, can detect radio wave). The one or the plurality of communication nodes may be one or more or all of the communication nodes in a predetermined area, or may be the communication nodes in a range in which the terminal device 100 can detect radio waves among all the communication nodes. Alternatively, the one or the plurality of communication nodes may be one or more or all of the communication nodes belonging to the same operator as the communication device 200 in a predetermined area, or may be the communication nodes in a range in which the terminal device 100 can detect radio waves among all the communication nodes. The control unit 150 may acquire, from the communication device 200, information regarding one or a plurality of target communication nodes.

The control unit 150 may receive information regarding the specifications and capabilities of one or a plurality of communication nodes from the one or the plurality of communication nodes. The control unit 150 may receive, from the one or the plurality of communication nodes, information regarding the QCL setting in each communication node of the one or the plurality of communication nodes. For example, in a plurality of antenna ports in a communication node, the control unit 150 may receive, from the one or the plurality of communication nodes, information regarding two or more antenna ports for which the first QCL is set, and information regarding two or more antenna ports for which the second QCL is set.

The control unit 150 may also receive, from the one or the plurality of communication nodes, information regarding the communication quality of the propagation path between the terminal device 100 and the above one or the plurality of communication nodes. The control unit 150 may receive the information regarding the communication quality from the communication device 200 or another communication node. Alternatively, the control unit 150 may measure the communication quality of the propagation path to a plurality of communication nodes, and receive information about the measured communication quality from the plurality of communication nodes. The control unit 150 may perform measurement on the basis of a communication quality measurement instruction from the communication device 200. The control unit 150 may transmit the information about the measured communication quality to the communication device 200. Examples of communication quality include reference signal received power (RSRP), reference signal received quality (RSRQ), and received signal strength indicator (RSSI).

The control unit 150 performs clustering on the above plurality of communication nodes. For example, on the basis of the communication quality of the propagation path to the plurality of communication nodes, the control unit 150 performs clustering on the plurality of communication nodes, and generates one or more clusters each including one or more communication nodes. For example, one or more clusters in which the average communication quality of the communication nodes is equal to or greater than a threshold are generated. Communication nodes may be included and shared among a plurality of clusters, but at least one communication node may be required to be different. In a case where the clustering targets are antenna ports, the first antenna port set and the second antenna port set may be generated as a plurality of clusters, for example. The number of antenna port sets to be generated is not limited to two, and may be three or more.

The control unit 150 may transmit control information including information regarding the generated one or more clusters to the communication device 200. For example, the control unit 150 may transmit one or more pieces of antenna port set information including the generated antenna port sets to the communication device 200. In a case where information received from the terminal device 100 indicates a plurality of clusters, the control unit 250 of the communication device 200 may identify the cluster (including a case with antenna port sets) with which the terminal device 100 is to actually communicate. The control unit 250 of the communication device 200 controls one or more communication nodes belonging to the cluster to communicate with the terminal device 100, or, for example, to transmit or receive a signal/channel.

### <Details of Clustering>

In the description below, clustering to be performed in a network (a communication device in a network) or the terminal device 100, and operations related to the clustering are explained in greater detail. The communication device on the network side is a base station device, a communication node other than a base station device, a core network, or the like, for example, and is described below on the assumption of a case where the communication device is a base station device. In the description below, three examples of clustering and related operations (these examples will be referred to as clustering methods) are explained. However, there are various clustering methods, and the clustering methods are not limited to the examples described below. Likewise, the definition of a cluster and the communication nodes constituting a cluster are not limited to those in the following examples, and the above-described definition and communication nodes may be adopted.

### [Example 1A of Clustering and Related Operations (Clustering Method 1A)]

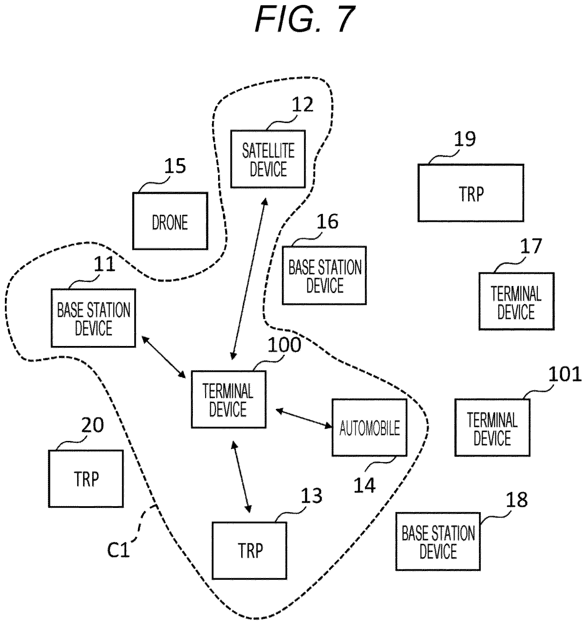

Fig. 7 is a diagram for explaining a clustering method 1A implemented in the terminal device 100 or the communication device 200. In a manner similar to that illustrated in Fig. 2 described above, a cluster C1 including communication nodes 11 to 14 is generated beforehand in an appropriate manner. For example, the communication device 200 notifies the terminal device 100 of a cluster set including information about the cluster C1 by RRC signaling, and thus, the cluster C1 is set. Note that the communication device 200 may be a communication node to which the terminal device 100 is connected in the initial connection procedure, or may be a communication node connected by a handover. Alternatively, the communication device 200 may be some other communication node.

The terminal device 100 performs processing for transmission and reception on the assumption that transmission and reception is being performed with all the communication nodes in the cluster C1. In other words, the terminal device 100 may not recognize whether transmission and reception is being actually performed with all the communication nodes. Further, in other words, the terminal device 100 may not recognize that the communication node that is performing transmission and reception is a specific communication node in the cluster C1. That is, from the viewpoint of the terminal device 100, the communication node that is actually performing communication is transparent.

In the example in Fig. 7, the terminal device 100 is communicating with the cluster C1, but the terminal device 100 can switch clusters to communicate with (perform a cluster handover). The method for switching clusters herein is a dynamic switching method or a semi-static switching method.

### (Dynamic Cluster Switching)

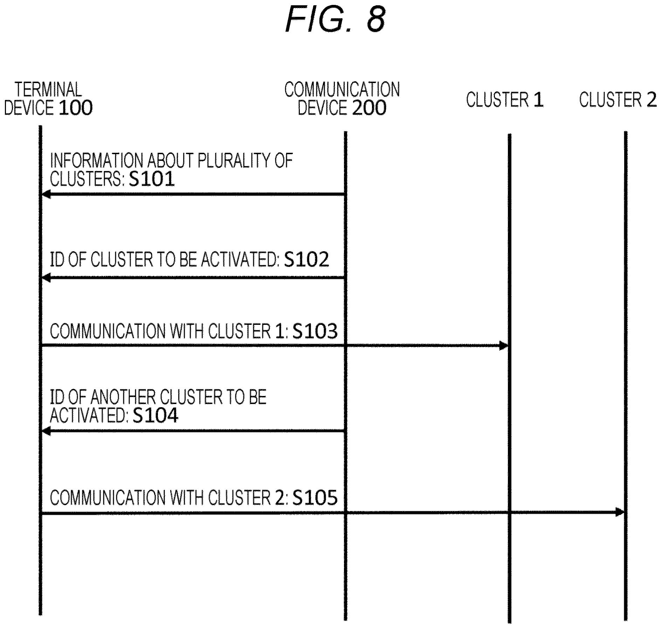

Fig. 8 is a sequence diagram illustrating an example of this operation.

The communication device 200 notifies the terminal device 100 of a cluster set including information about one or more clusters by RRC signaling (S101).

The information about each cluster included in the cluster set includes a cluster ID and a set (list) of information regarding one or more communication nodes included in the cluster.

The information regarding each communication node may also include information regarding one or more antenna ports. At this point of time, one communication node may be regarded as a set of antenna ports with the same QCL (in a QCL relationship). For example, in a case where one base station device (communication node) includes a plurality of antenna ports (a plurality of antennas), the plurality of antenna ports included in the base station device can be regarded as a set of antenna ports having the same QCL. However, there may be a case where there is a plurality of antenna port groups in one communication node, and the antenna port groups are not in a QCL relationship with each other. In general, it can be said that antenna port groups at a short physical distance from each other are in a QCL relationship. Whether or not there is a QCL relationship may be set beforehand in the communication node.

In a case where one communication node is regarded as a set of antenna ports with the same QCL (in a QCL relationship), information regarding the communication node may include information regarding the QCL (reference signal (RS) information for QCL, QCL type information, or the like).

The terminal device 100 is notified of the cluster ID of the cluster to be actually used (activated) by L1 signaling or L2 signaling (control information corresponding to a MAC CE) from the communication device 200 (S102). The terminal device 100 communicates with the cluster (a cluster 1 in the drawing) of which the terminal device 100 has been notified through the cluster ID (S103).

Instead of a notification of the cluster ID directly from the communication device 200, information associated with the cluster ID may be transmitted. Examples of such information include information about the resource to be allocated to the terminal device 100, and the bandwidth part (BWP) to be set in the terminal device 100. The BWP is part of the communication bandwidth available to the terminal device 100. When the data traffic is small, the BWP is set, so that the bandwidth of the terminal device 100 can be narrowed, and power consumption can be lowered. The terminal device 100 can detect the cluster to be connected from the information associated with the cluster ID, through internal processing. For example, a table in which the cluster ID and the value of the information are associated with each other may be held in the terminal device 100. The cluster ID corresponding to the value of the received information can be identified from the table. As a result, it is possible to implicitly notify the terminal device 100 of the cluster ID. That is, there is no need to directly notify the terminal device 100 of the cluster ID.

The communication device 200 can change the cluster ID of which the terminal device 100 is to be notified, to switch the cluster to another cluster (a cluster 2 in the drawing) (S104, S105).

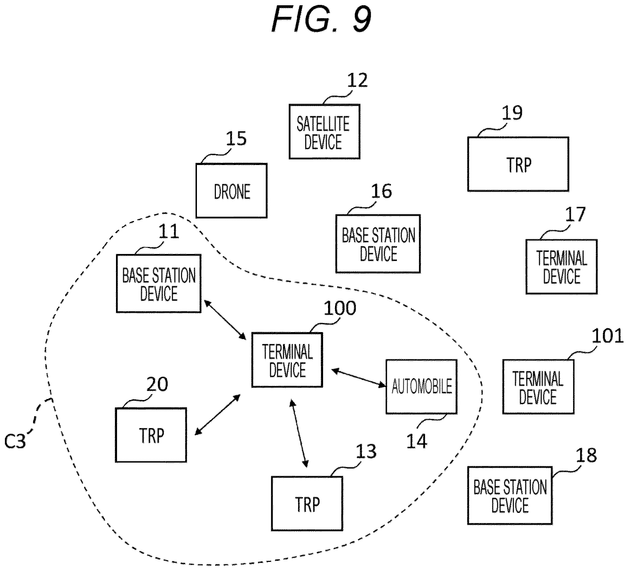

Fig. 9 illustrates an example in which the terminal device 100 switches the cluster to communicate with from the cluster C1 to a cluster C3. While communicating with the cluster C1, the terminal device 100 switches the cluster from the cluster C1 to the cluster C3 in accordance with the cluster ID of which the terminal device 100 is notified by L1 signaling or L2 signaling (control information corresponding to a MAC CE) from the communication device 200.

### <Semi-Static Cluster Switching>

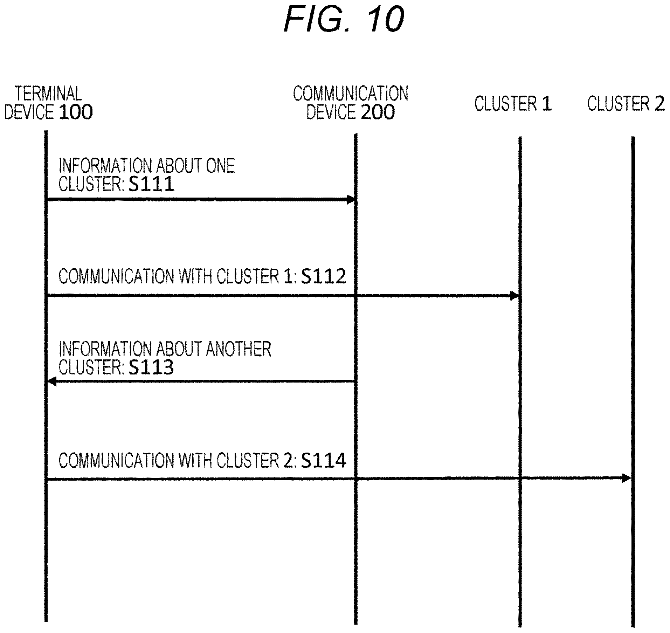

Fig. 10 is a sequence diagram illustrating an example of this operation.

The communication device 200 transmits one cluster to be used to the terminal device 100 by RRC signaling (S111). The terminal device 100 communicates with the cluster designated by the RRC signaling (S112). In a case where clusters are switched, the communication device 200 instructs the terminal device 100 to switch clusters, by transmitting an RRC reconfiguration message including information indicating another cluster (which is a cluster ID) (S113). The terminal device 100 switches the cluster to communicate with from the original cluster (source cluster) to another cluster (target cluster). More specifically, together with information indicating the another cluster, frequency information, setting information related to random access, and information regarding synchronization signal setting may be included in the same RRC reconfiguration message. In this case, the terminal device 100 performs time synchronization with the another cluster, using the information regarding synchronization signal setting at the frequency indicated by the frequency information included in the RRC reconfiguration message, and performs random access in the another cluster on the basis of the setting information regarding random access. By doing so, the terminal device 100 switches the cluster to communicate with to the another cluster. Note that the clusters before and after switching can be individually set in accordance with the type and the purpose of the channel or control information.

### [Example 1B of Clustering and Related Operations (Clustering Method 1B)]

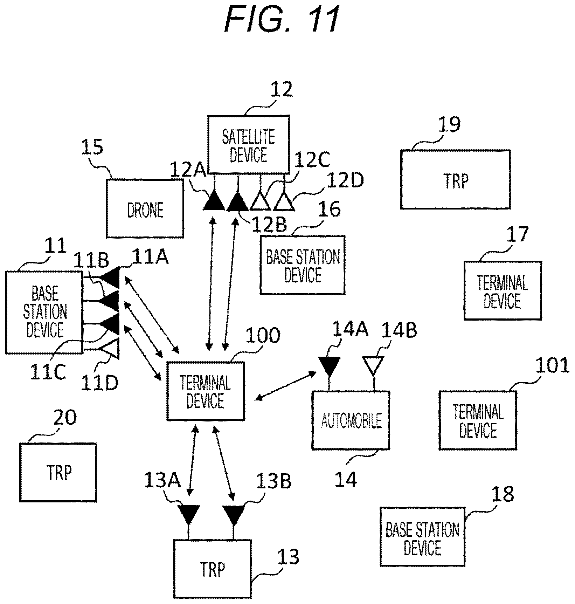

Fig. 11 is a diagram for explaining a clustering method 1B implemented in the terminal device 100. The clustering method 1B is a method that is implemented in a case where the communication nodes to be clustered are antenna ports in the clustering method 1A. Each communication node has one or more antenna ports (antennas). The communication node 11 includes antenna ports 11A to 11D, the communication node 12 includes antenna ports 12A to 12D, the communication node 13 includes antenna ports 13A and 13B, and the communication node 14 includes antenna ports 14A and 14B. The communication nodes 15 to 20 also include antenna ports that are not shown in the drawing.

The antenna ports to be clustered in the terminal device 100 are some or all of the antenna ports included in the communication nodes 11 to 20. In this example, the black antenna ports are the clustered antenna ports. Specifically, the antenna ports 11A to 11C of the communication node 11, the antenna ports 12A and 12B of the communication node 12, the antenna ports 13A and 13B of the communication node 13, and the antenna port 14A of the communication node 14 are clustered into one cluster by clustering. The white antenna ports (11D, 12C, 12D, and 14B) and the antenna ports, which are not shown in the drawing, of the communication nodes 15 to 20 are the antenna ports that are not clustered.

The terminal device 100 sets a QCL relationship among the antennas 11A to 11C of the communication node 11, sets a QCL relationship between the antennas 12A and 12B of the communication node 12, and sets a QCL relationship between the antennas 13A and 13B of the communication node 13. Although the antenna 14A is the only one antenna clustered in the communication node 14, a QCL relationship is also set for the one antenna 14A in this case. The terminal device 100 performs clustering and QCL setting, on the basis of the clustering and QCL setting information included in the control information (RRC signaling, L1 signaling, L2 signaling, and the like) received from the communication device 200.

The method for switching antenna port sets (clusters) can be either a dynamic switching method or a semi-static switching method, as in the clustering method 1A. A sequence diagram according to this clustering method 1B is the same as those shown in Figs. 8 and 10, but the clusters should be read as antenna port sets, and the information about clusters should be read as antenna port set information or the like, as appropriate.

Examples of the control information the communication device 200 sets in the terminal device 100 or the control information of which the terminal device 100 is notified by the communication device 200 in the example in Fig. 11 are now described. An RRC message (RRC signaling) and DCI (L1 signaling) are shown as examples of the control information. Not only either an RRC message or DCI may be used, but also both may be used depending on the purpose of control. DCI is an example of L1 signaling, and is transmitted as a notification by a physical downlink control channel (PDCCH).

### (RRC message (RRC signaling))

The communication device 200 transmits an RRC message including control information to the terminal device 100 by RRC signaling (see S101 in Fig. 8).

The control information includes one or more pieces of antenna port set information. Each piece of the antenna port set information includes an antenna port set ID and one or more pieces of QCL antenna port set information.

The QCL antenna port set information includes at least one of the following items of information.
- The number of antenna ports
- Information regarding semi-static frequency resources: which indicates candidates for frequency resources to be used for transmission and reception, the frequency resource to be actually used being transmitted as a notification by DCI. For example, there are a frequency band (Band), a cell ID (in a case where the frequency band is identified with the cell ID), and a bandwidth part (BWP).
- QCL type
- RS information for a QCL (information for identifying the RS for referring to the QCL): in a case where a QCL is set between two antenna ports, for example, a DMRS is set as RS information for one antenna port, and a CSI-RS is set as RS information for the other antenna port.

A specific example of the antenna port set information in the example in Fig. 11 is now described. Antenna port set information including one antenna port set including the antenna ports 11A to 11D, 12A, 12B, 13A, 13B, and 14A is generated. An antenna port set whose ID is X (X = 1, 2, 3,...) is referred to as the antenna port set X, and antenna port set information of the antenna port set whose ID is X is referred to as the antenna port set information X. The ID of the antenna port set generated in the example in Fig. 11 is 1, for example.

Since a QCL is set for each of the communication nodes 11 to 14 in the example in Fig. 11, the antenna port set information 1 includes four pieces of QCL antenna port set information. Because the number of QCL-set antenna ports of the communication node 11 is three, the number of antenna ports in the QCL antenna port set information corresponding to the communication node 11 is three. In the QCL antenna port set information corresponding to the communication node 11, in addition to the number of antenna ports, the information regarding the semi-static frequency resource, the QCL type, and the RS information for the QCL are set as described above. QCL antenna port set information is also set for the communication nodes 12 to 14 in a similar manner.

### (DCI (L1 signaling))

The communication device 200 transmits DCI including the control information (including the antenna port set ID and conditions such as the resource to be used) to the terminal device 100 by L1 signaling (see S102 in Fig. 8).

The control information (DCI) includes at least one item of the following information.
- Antenna port set ID
- Information regarding a dynamic frequency resource (information regarding the frequency resource to be actually used for transmission and reception)
- Information regarding the time resource to be used
- Information regarding the beam or precoating to be used (transmission weight setting for beamforming, for example)
- Information regarding the multiplexing method to be used

In a case where a plurality of pieces of antenna port set information is set for the antenna port set ID by RRC signaling, the communication device 200 notifies the terminal device 100 of only one antenna port set ID by DCI (see S102 in Fig. 8). That is, in a case where a notification of a plurality of IDs of the antenna port sets to be used is transmitted by an RRC message, the terminal device 100 is notified of the ID of the antenna port set to be actually used by DCI. In a case where a notification of only one piece of antenna port set information is transmitted by an RRC message, the operation of notifying the terminal device 100 of only one antenna port set ID by DCI may be unnecessary. Specifically, all values of the bit fields related to antenna port set IDs in the DCI are only required to be set to 0 bits. The terminal device 100 performs communication on the antenna port set designated by the antenna port set ID included in the control information (see S103 in Fig. 8).

In a case where a plurality of pieces of QCL antenna port set information is set in the antenna port set information with respect to the above information regarding the multiplexing method, information about the multiplexing method to be adopted among a plurality of QCL antenna port sets is included in the DCI. Specific examples are described below.

As the information regarding the multiplexing method, there is information regarding simultaneous transmission (spatial multiplexing: SDM), for example. There is information indicating that downlink transmission is to be performed from all clustered antenna ports, using the same time-frequency resource, for example.

As another example regarding the multiplexing method, there is information regarding time-division multiplexing (TDM). For example, there is information indicating that downlink transmission is to be performed with a different slot, symbol, or subframe for each QCL antenna port set. How to perform time-division transmission for each QCL antenna port set may be set by DCI (L1 signaling) or RRC signaling, or may be specified in advance.

As yet another example regarding the multiplexing method, there is information regarding frequency-division multiplexing (FDM). For example, there is information indicating that transmission and reception is to be performed with a different resource block for each QCL antenna port set. How to perform frequency division for each QCL antenna port set may be set by DCI (L1 signaling) or RRC signaling, or may be specified in advance.

Note that the information regarding the multiplexing method may be included in the antenna port set information that is transmitted as a notification by RRC signaling. That is, the signaling of the information regarding the multiplexing method is semi-static signaling.

In a case where the terminal device 100 is made to switch antenna port sets, the communication device 200 transmits DCI including the control information (including the changed antenna port set ID or the like) to the terminal device 100 by L1 signaling in a manner similar to the above (see S104 in Fig. 8). The terminal device 100 switches to the antenna port set designated by the antenna port set ID designated in the control information (see S105 in Fig. 8).

Although dynamic antenna port set switching has been described as an example, semi-static antenna port set switching can also be performed in a sequence similar to that in the case of the clustering method 1A (see Fig. 10).

### [Example 2A of Clustering and Related Operations (Clustering Method 2A)]

In this example, the terminal device 100 is described as an example of a terminal device, but similar operations can be performed with other terminal devices (such as the terminal device 101, for example). It is assumed that the terminal device 100 or the communication device 200 first generates a cluster including one or more communication nodes. In this example, the terminal device 100 generates the cluster C1 including the communication nodes 11 to 14, as in Fig. 2 described above.

The communication nodes 11 to 14 included in the cluster C1 are candidates with which the terminal device 100 is to communicate, and the terminal device 100 communicates with some or all of the communication nodes 11 to 14 included in the cluster C1. For example, the terminal device 100 selects some of the communication nodes 11 to 14 included in the cluster C1 as a subcluster, and communicates with the subcluster. The communication nodes with which the terminal device 100 actually communicates among a plurality of communication nodes included in a cluster are referred to as the communication nodes to be activated.

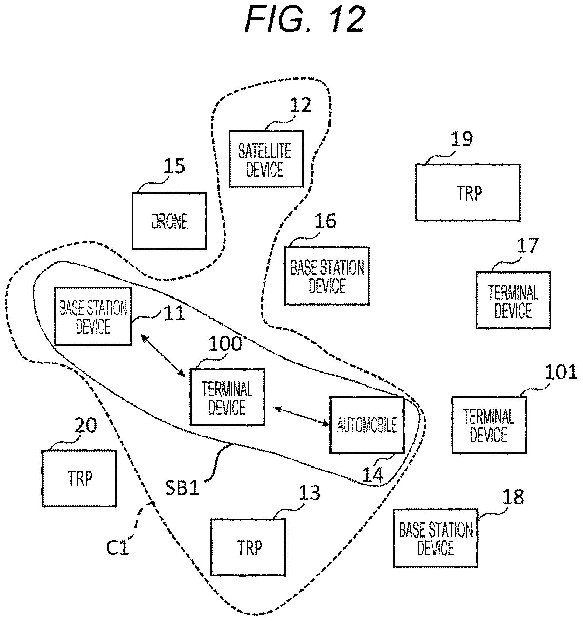

Fig. 12 illustrates an example in which the terminal device 100 uses two communication nodes 11 and 14 among the communication nodes 11 to 14 included in the cluster C1 as a subcluster SB1, and communicates with the subcluster SB1. The terminal device 100 can also switch the subcluster to communicate with from the subcluster SB1 to another subcluster.

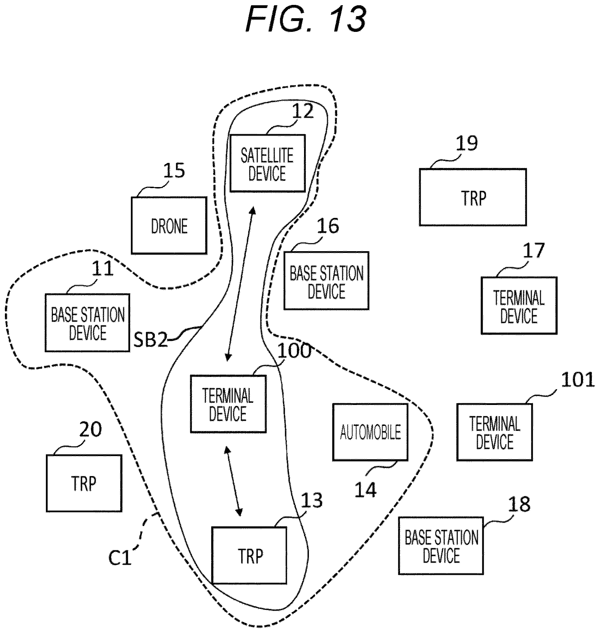

Fig. 13 illustrates an example in which the terminal device 100 switches the subcluster SB1 to a subcluster SB2 including two communication nodes 12 and 13 among the communication nodes 11 to 14 included in the cluster C1.

The examples of subclusters illustrated in Figs. 12 and 13 are examples, and other subclusters may be generated. Further, the number of communication nodes included in a subcluster is not necessarily two, and may be one, or three or more.

The terminal device 100 can also switch not only subclusters but also clusters (see Fig. 9). As described above, cluster switching is dynamic switching or semi-static switching.

### (Dynamic Subcluster Switching)

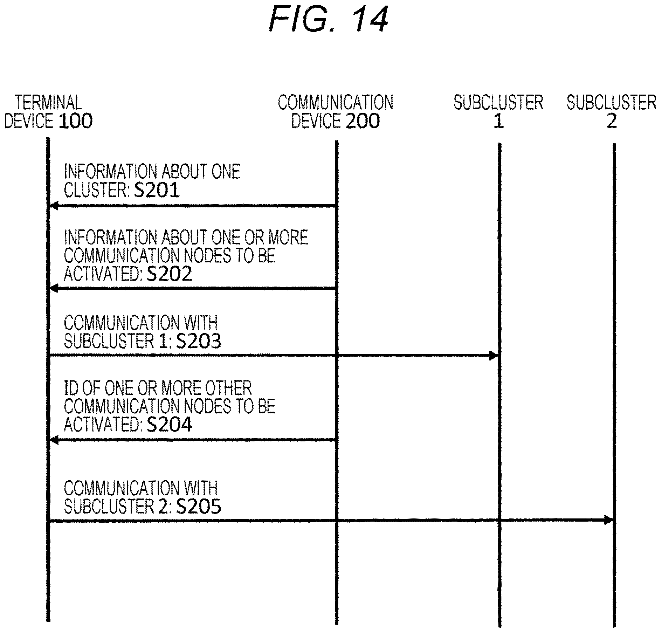

Fig. 14 is a sequence diagram illustrating an example of this operation.

The terminal device 100 receives cluster information transmitted as a notification by RRC signaling from the communication device 200 (S201). The cluster information includes information regarding one cluster. The cluster information includes a set (list) of information about one or more communication nodes included in the one cluster, which means that the cluster information includes node IDs that are the identifiers of the respective communication nodes. Further, the cluster information includes the identifier(s) of one or more communication nodes (a subcluster) to be actually used among the communication nodes included in the cluster. A node set ID (subcluster ID) corresponding to the identifier of the node set (subcluster) may be included in the cluster information. In this case, the node set ID may be associated with the ID(s) of the one or more communication nodes belonging to the subcluster. The terminal device 100 sets a subcluster on the basis of the cluster information (S202), and communicates with the subcluster (S203). The drawing shows an example in which the terminal device 100 communicates with the subcluster 1.

The cluster information may include information regarding one or more antenna ports associated with the IDs of the respective communication nodes. At this point of time, one communication node may be regarded as a set of antenna ports with the same QCL (in a QCL relationship). In that case, the information regarding each communication node may include information regarding the QCL (RS information for the QCL, QCL type, and the like).

The terminal device 100 switches subclusters, on the basis of one or more node IDs or node set IDs transmitted as a notification by L1 signaling or L2 signaling (control information corresponding to a MAC CE) (S204 and S205). In other words, the communication device 200 notifies the terminal device 100 of the one or more communication nodes to be activated by L1 signaling or L2 signaling (control information corresponding to the MAC CE), to cause the terminal device 100 to switch subclusters.

For example, in a case where the terminal device 100 is made to actually communicate with some communication nodes of the plurality of communication nodes included in the cluster, the communication device 200 notifies the terminal device 100 of the node IDs of the some communication nodes. The communication device 200 may notify the terminal device 100 of the node IDs, using information in a bitmap format.

In a case where a class including the four communication nodes 11 to 14 is set by RRC signaling, the terminal device 100 is notified of the designated communication nodes by 4-bit bitmap information corresponding to the communication nodes 11 to 14. For example, in a case where the terminal device 100 is made to actually communicate with the communication nodes 11 and 14, the communication device 200 sets a flag to the bits corresponding to the communication nodes 11 and 14 (sets the value of the bits to 1), and sets the value of the bits corresponding to the communication nodes 12 and 13 to 0. On the basis of the bitmap information, the terminal device 100 activates the communication nodes 11 and 14 associated with the flagged bits. That is, the terminal device 100 determines the communication nodes 11 and 14 to be the communication nodes to actually communicate with, among the communication nodes 11 to 14.

In another example, the terminal device 100 may be notified of information (such as resource information or a BWP, for example) associated with at least either the cluster ID or the subcluster ID, by L1 signaling or L2 signaling (control information corresponding to the MAC CE). The terminal device 100 can detect at least either the cluster ID or the subcluster ID by an internal process, on the basis of the associated information. For example, a table in which at least either the cluster ID or the subcluster ID is associated with the value of the information is held in the terminal device 100. At least either the cluster ID or the subcluster ID corresponding to the value of the received information is identified from the table. As a result, it is possible to implicitly notify the terminal device 100 of at least either the cluster ID or the subcluster ID. That is, there is no need to explicitly notify the terminal device 100 of at least either the cluster ID or the subcluster ID.

### (Semi-Static Subcluster Switching)

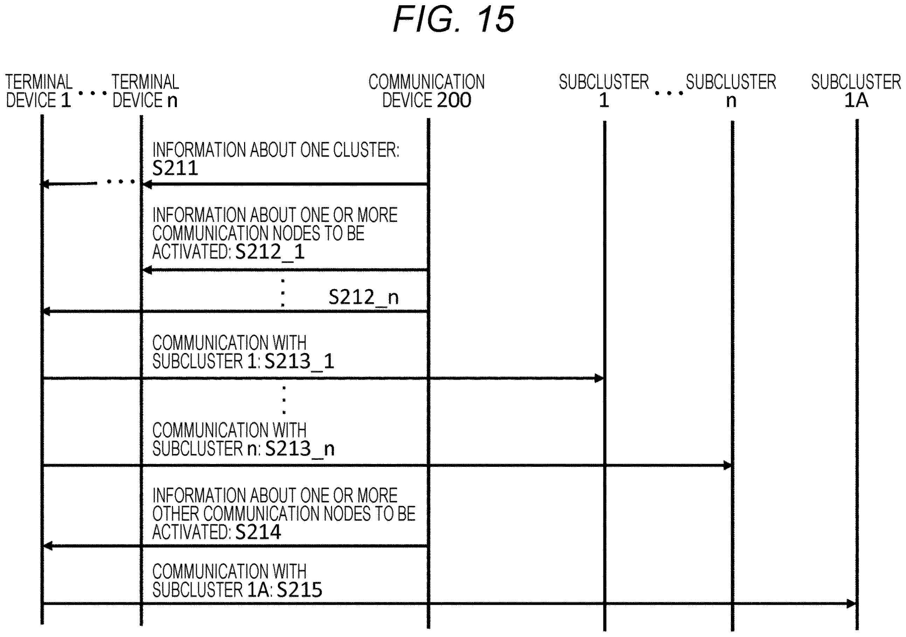

Fig. 15 is a sequence diagram illustrating an example of this operation.

The communication device 200 sets one cluster in a terminal device group including one or more terminal devices (terminal devices 1 to n in the drawing) by RRC signaling (S211). The terminal device group includes one or more terminal devices. The one cluster that is set in the terminal device group is used and shared among the respective terminal devices belonging to the terminal device group. There may be a plurality of terminal device groups. In this case, a unique cluster is set for each terminal device group. The communication device 200 or the terminal device 100 groups terminal devices by any appropriate method. For example, one or more terminal devices that exist in the same area and are connected to a service of an operator who is operating the communication device 200 are grouped into one group.

In one cluster, communication nodes (a subcluster) to be activated are uniquely set by RRC signaling by the communication device 200 for each terminal device belonging to the group (S212_1 to S212_n). L1 signaling or L2 signaling may be used instead of RRC signaling. The terminal devices 1 to n communicate with the set subclusters 1 to n, respectively (S213_1 to S213_n). After that, in a case where subclusters are switched, the communication device 200 reconfigures the subcluster for each terminal device through an RRC reconfiguration message. In the example illustrated in the drawing, the subcluster for the terminal device 1 is reconfigured from the subcluster 1 to a subcluster 1A, and the terminal device 1 communicates with the subcluster 1A (S214 and S215). Note that a subcluster can be set individually for each terminal device, in accordance with the channel, or the type or purpose of the control information.

### [Example 2B of Clustering and Related Operations (Clustering Method 2B)]

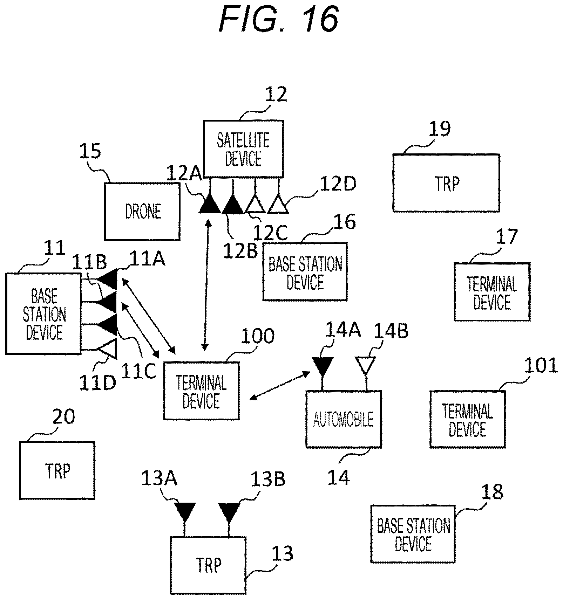

Fig. 16 is a diagram for explaining a clustering method 2B implemented in the terminal device 100 or the communication device 200. The clustering method 2B is a method that is implemented in a case where the communication nodes to be clustered are antenna ports in the clustering method 1A. Each communication node has one or more antenna ports (antennas). The communication node 11 includes antenna ports 11A to 11D, the communication node 12 includes antenna ports 12A to 12D, the communication node 13 includes antenna ports 13A and 13B, and the communication node 14 includes antenna ports 14A and 14B. The communication nodes 15 to 20 also include antenna ports that are not shown in the drawing.

The antenna ports to be clustered are some or all of the antenna ports included in the communication nodes 11 to 20. In this example, the black antenna ports are the clustered antenna ports. Specifically, the antenna ports 11A to 11C of the communication node 11, the antenna ports 12A and 12B of the communication node 12, the antenna ports 13A and 13B of the communication node 13, and the antenna port 14A of the communication node 14 are clustered into one cluster by clustering. The white antenna ports (11D, 12C, 12D, and 14B) and the antenna ports, which are not shown in the drawing, of the communication nodes 15 to 20 are the antenna ports that are not clustered.

As described in the explanation of the clustering method 2A, the terminal device 100 can dynamically or semi-statically activate some or all of the antenna ports (11A to 11C, 12A, 12B, 13A, 13B, and 14A) included in the set cluster. That is, one or more antenna ports to be actually used for communication are selected from among the antenna ports included in the cluster. The selected one or more antenna ports correspond to a subcluster. In the example in Fig. 13, the terminal device 100 selects the antenna ports 11A, 11B, 12A, 12B, and 14A to form a subcluster.

Examples of the control information the communication device 200 sets in the terminal device 100 or the control information of which the terminal device 100 is notified by the communication device 200 are now described. An RRC message (RRC signaling) and DCI (L1 signaling) are shown as examples of the control information. Not only either an RRC message or DCI may be used, but also both may be used depending on the purpose of control.

A sequence diagram according to this clustering method 1B is similar to those in Figs. 14 and 15. The clusters in Figs. 14 and 15, and descriptions of these drawings correspond to antenna port sets, and the subclusters correspond to sub antenna port sets.

### (RRC message (RRC signaling))

The communication device 200 transmits an RRC message including control information to the terminal device 100 by RRC signaling (see S201 in Fig. 14).

The control information includes one piece of antenna port set information. Each piece of antenna port set information includes one or more pieces of antenna port information. The antenna port information includes an antenna port ID, information regarding a semi-static frequency resource, a QCL type, and RS information for the QCL. Details of these pieces of information are similar to those in the explanation of the clustering methods 1A and 1B described above, and therefore, explanation of them is not made herein.

### (DCI (L1 signaling))

The communication device 200 transmits DCI including the control information (including information about the antenna ports to be activated (information about the sub antenna port set), and conditions such as the resource to be used) to the terminal device 100 by L1 signaling (see S202 in Fig. 14). The terminal device 100 performs communication using the antenna ports designated by the control information, in accordance with the conditions such as the designated use resource (see S203 in Fig. 14).

The control information (DCI) includes at least one item of the following information.
- Information about the antenna ports to be activated (information about the sub antenna port set)
- Information regarding a dynamic frequency resource (information regarding the frequency resource to be actually used for transmission and reception)
- Information regarding the time resource to be used
- Information regarding the beam or precoating to be used (transmission weight setting for beamforming, for example)
- Information regarding the multiplexing method to be used

Regarding the information about the antenna ports to be activated (the sub antenna port set), the communication device 200 notifies the terminal device 100 of the IDs of the antenna ports to be activated (with which transmission and reception are to be actually performed). As described above, the information about the antenna ports may be in a bitmap format. In this case, the bit positions and the antenna port IDs are associated with each other beforehand in the communication device 200 and the terminal device 100. The communication device 200 generates bitmap information in which the values of the bits corresponding to the one or more antenna ports to be activated by the terminal device 100 are set to 1, and the values of the remaining bits are set to 0, and transmits the bitmap information to the terminal device 100. The terminal device 100 detects the bits having the bit value of 1 in the bitmap information received from the communication device 200, activates the antenna ports corresponding to the detected bits, and sets the antenna ports as the actual communication targets.

Details of the information regarding the time resource to be used, the information regarding the beam or the precoating to be used, and the information regarding the multiplexing method to be used are similar to the contents described in the explanation of the clustering method 1A, and therefore, explanation of them is not made herein.

In a case where the terminal device 100 is made to switch antenna ports (sub antenna port sets) to use, the communication device 200 transmits DCI including the control information to the terminal device 100 by L1 signaling in a manner similar to the above (see S204 in Fig. 14). The control information includes information about the one or more antenna ports after the change, and the like. The terminal device 100 switches to the one or more antenna ports (sub antenna ports) designated by the control information (see S205 in Fig. 14).

Although dynamic antenna port switching has been described as an example, semi-static antenna port switching can also be performed in a sequence similar to that in the case of the clustering method 2A.

### [Example 3A of Clustering and Related Operations (Clustering Method 3A)]

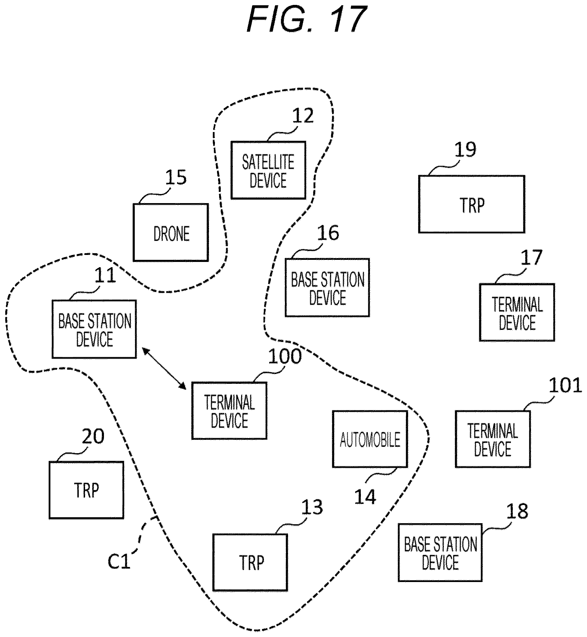

Fig. 17 is a diagram for explaining an example of a clustering method 3A implemented in the terminal device 100 or the communication device 200. In this example, the terminal device 100 is described as a terminal device, but similar operations can be performed with other terminal devices (such as the terminal device 101, for example). The terminal device 100 or the communication device 200 generates the cluster C1 including the communication nodes 11 to 14, as in Fig. 2 described above.

The communication nodes 11 to 14 included in the cluster C1 are candidate communication nodes, and the terminal device 100 selects (activates) one of the clustered communication nodes 11 to 14 and communicates with the selected one communication node. The selected communication node may be regarded as a subcluster. In the example in Fig. 17, the terminal device 100 activates the communication node 11, and communicates with the communication node 11. The clustering method 3A can be regarded as a subset of the clustering method 2A, and corresponds to a case where one communication node is activated in the clustering method 2A. The clustering method 3A has high affinity with cell-based communication, and can be used in 4G/5G/NG.

### [Example 3B of Clustering and Related Operations (Clustering Method 3B)]

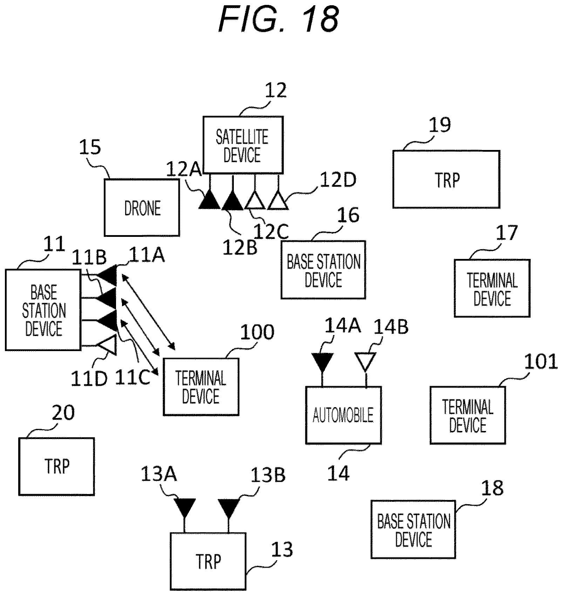

Fig. 18 is a diagram for explaining an example of a clustering method 3B implemented in the terminal device 100 or the communication device 200. The clustering method 3B is a method that is implemented in a case where the communication nodes to be clustered are antenna ports in the clustering method 3A. The clustering method 3B can be regarded as a subset of the clustering method 2B, and corresponds to a case where the antenna ports activated in the clustering method 2B are antenna ports included in one communication node.

Each communication node has one or more antenna ports (antennas). The communication node 11 includes antenna ports 11A to 11D, the communication node 12 includes antenna ports 12A to 12D, the communication node 13 includes antenna ports 13A and 13B, and the communication node 14 includes antenna ports 14A and 14B. The communication nodes 15 to 20 also include antenna ports that are not shown in the drawing.

The antenna ports to be clustered in the terminal device 100 are some or all of the antenna ports included in the communication nodes 11 to 20. In this example, the black antenna ports are the clustered antenna ports. Specifically, the antenna ports 11A to 11C of the communication node 11, the antenna ports 12A and 12B of the communication node 12, the antenna ports 13A and 13B of the communication node 13, and the antenna port 14A of the communication node 14 are clustered into one cluster by clustering. The white antenna ports (11D, 12C, 12D, and 14B) and the antenna ports, which are not shown in the drawing, of the communication nodes 15 to 20 are the antenna ports that are not clustered.

The terminal device 100 dynamically or semi-statically activates the antenna ports (11A to 11C, 12A, 12B, 13A, 13B, and 14A) included in the set cluster. That is, all the antenna ports included in one communication node among the antenna ports included in the cluster are selected (activated) as the antenna ports to be actually used for communication. The selected antenna ports correspond to a subcluster. In the example in Fig. 18, in the communication node 11 having the antenna ports 11A to 11D, the three antenna ports 11A to 11C are set as part of a cluster, and the terminal device 100 activates all of these three antenna ports 11A to 11C. Among all the clustered antenna ports, the antenna ports not belonging to the communication node 11 are not used for actual communication. The communication device 200 notifies the terminal device 100 of information about the one communication node to be activated.

Not all the antenna ports clustered in one communication node may be activated, but some of the clustered antenna ports may be activated. In this case, the antenna ports that can be activated may also be limited to one communication node.

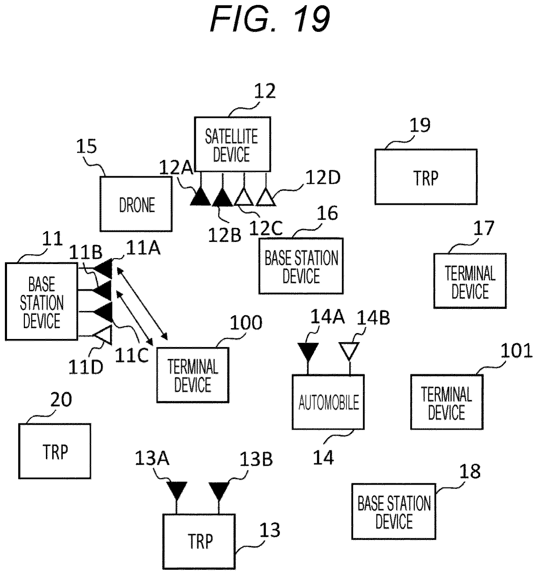

Fig. 19 illustrates an example in which two antenna ports 11A and 12B among the clustered antenna ports 11A to 11C of the communication node 11 are activated. That is, only some antenna ports of the three clustered antenna ports are activated. The number of antenna ports to be activated is not necessarily two, and may be one.

### <Criteria of Clustering>

The communication device 200 or the terminal device 100 can use the following criteria when performing clustering of communication nodes for each terminal device (determining a cluster to be allocated to each terminal device). In the criteria described below, the subject performing clustering may be either the communication device 200 or the terminal device 100.

### [Network (Operator)-Specific Clustering]

The same clustering is performed on all the terminal devices connected to a network (operator) that is managed by the communication device 200. That is, the same cluster is allocated to all the terminal devices. The same clustering may be performed only on the terminal devices belonging to a predetermined area. Different clustering may be performed for each area.

### [Terminal-Device-Group-Specific Clustering]

Clustering common to one or more terminal devices (which is a terminal device group) is performed. A terminal device group can be determined on the basis of a condition or the like regarding at least one of a location of each terminal device, an operation of each terminal device, and a state of each terminal device. Also, a terminal device group may be determined by the communication device 200 or a network (operator), or may be determined by a predetermined terminal device (the terminal device 100, for example).

### [Terminal-Device-Specific Clustering]

Clustering is individually performed on each terminal device. For example, clustering is individually performed on each terminal device, on the basis of a condition or the like related to at least one of a location of the terminal device, an operation of the terminal device, and a state of the terminal device.

### <Subjects That Perform Clustering>

As described above, clustering may be performed by either a network (a communication device in the network) in some cases, and may be performed by a terminal device in other cases. Each of the cases is described below.

### [Network Subjects (Communication Devices Such As a Base Station Device, a Communication Node, a Core Network, and a Server)]

(1) A terminal device measures the communication quality of each communication node and reports the communication quality to the network, and the network having received the report from the terminal device, or more specifically, a communication device (the communication device 200 or the like in Fig. 5) in the network determines a cluster.

The communication device that determines a cluster may be a base station device, an IRB, a core network, a server, or some other communication node. The server may be a server on the Internet or a server on a local network. There may be one or a plurality of communication devices that perform clustering. In a case where the communication device that performs clustering is not a base station device, the communication device may acquire information necessary for clustering via a base station device, and transmit a result of the clustering to a terminal device via the base station device.

In the description below, an operation of performing clustering with a network is explained in detail.

### - Downlink (DL)-based method

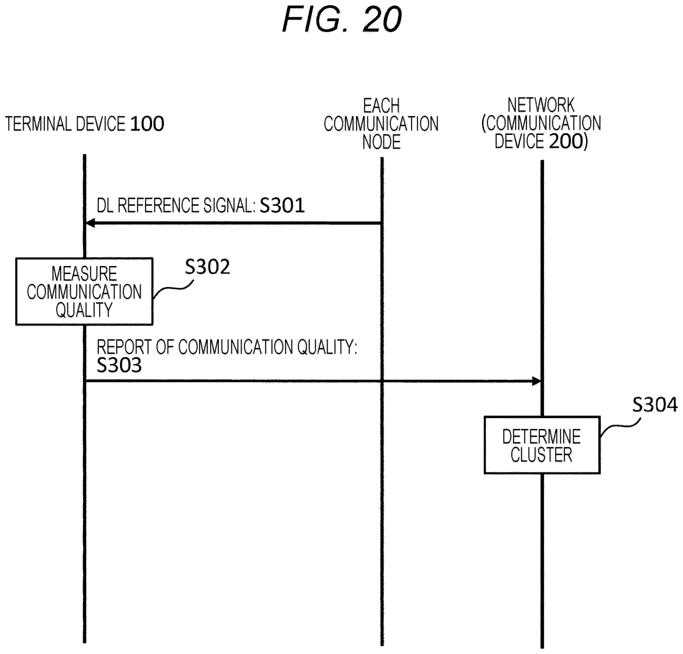

Fig. 20 is a sequence diagram illustrating an example of an operation according to a first method by which a network (a communication device) determines a cluster. The terminal device 100 receives a DL reference signal transmitted from each communication node (S301). The terminal device 100 measures the communication quality of each communication node, on the basis of the DL reference signal (S302). The terminal device 100 reports the measured communication quality to the communication device 200 (S303). The communication device 200 determines one or more clusters for the terminal device 100 (S304).

For example, a predetermined number of upper communication nodes with high communication quality, or one or a plurality of communication nodes with communication quality equal to or higher than a threshold is determined as a cluster for the terminal device. In a case where the communication nodes to be clustered are antenna ports, a cluster may be determined so as to include one or more antenna ports for which a certain QCL is set, and one or more antenna ports for which another QCL is set.

### - Uplink (UL)-based method

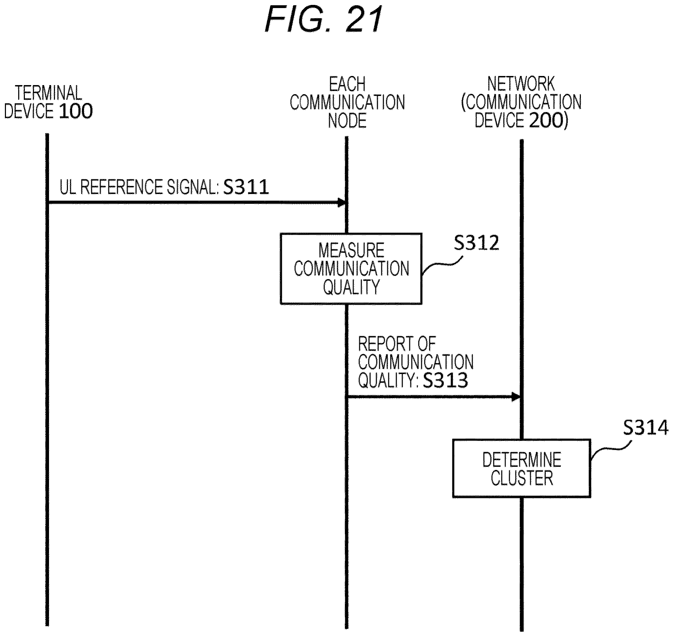

Fig. 21 is a sequence diagram illustrating an example of an operation according to a second method by which a network (a communication device) determines a cluster. The terminal device transmits a UL reference signal to one or more communication nodes (S311). The one or more communication nodes receive the UL reference signal (S311). Each communication node measures the communication quality of the propagation path to the terminal device, on the basis of the received UL reference signal (S312). The measured communication quality is aggregated from each communication node to the communication device 200 (S313). The communication device 200 determines a cluster for the terminal device 100, on the basis of information about the communication quality aggregated from the communication nodes (S314).

For example, a predetermined number of upper communication nodes with high communication quality, or one or a plurality of communication nodes with communication quality equal to or higher than a threshold is determined as a cluster for the terminal device. In a case where the communication nodes to be clustered are antenna ports, a cluster may be determined so as to include one or more antenna ports for which a certain QCL is set, and one or more antenna ports for which another QCL is set.

(2) A network (the communication device 200) determines a cluster, on the basis of positional information about a terminal device. This is described below in greater detail.

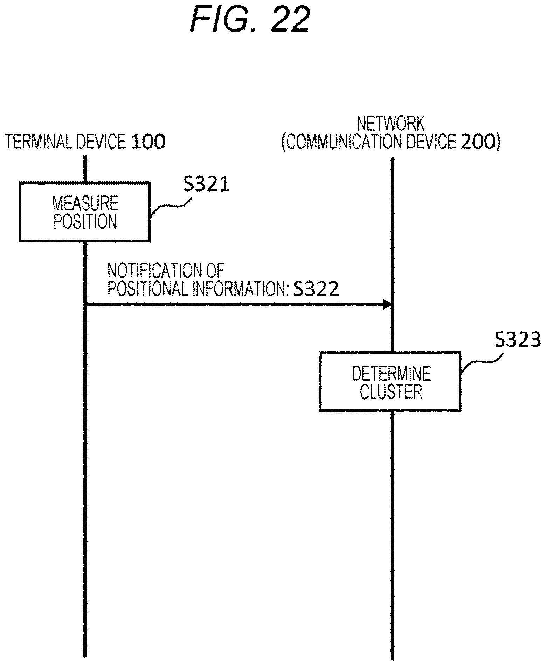

Fig. 22 is a sequence diagram illustrating an example of an operation in which a network (the communication device 200) determines a cluster.

The terminal device 100 measures the position of the terminal device 100 by a predetermined position measurement method (S321), and notifies the communication device 200 in the network of the positional information about the terminal device 100 (S322). Examples of the position measurement method include a method based on signals such as GPS, GNSS, BLE beacon, UWB, and positioning reference signal.

The communication device 200 performs clustering on the basis of the positional information about the terminal device 100, and determines a cluster for the terminal device (S323). The communication device 200 also grasps positional information about the communication nodes that can be clustered. The communication device 200 determines one or a plurality of communication nodes within a predetermined distance from the terminal device as a cluster, for example.

Note that the positional information may be absolute positional information (latitude, longitude, and altitude), relative positional information (the distance and the direction from a predetermined reference position), or information in some other format. Also, the positional information may include information regarding at least one of the position measurement method and the position estimation accuracy.

### [Terminal Device Subject]

(1) A terminal device measures communication quality of each communication node of a plurality of communication nodes, and determines a cluster on the basis of the measured communication quality. More specifically, this aspect is as described below.

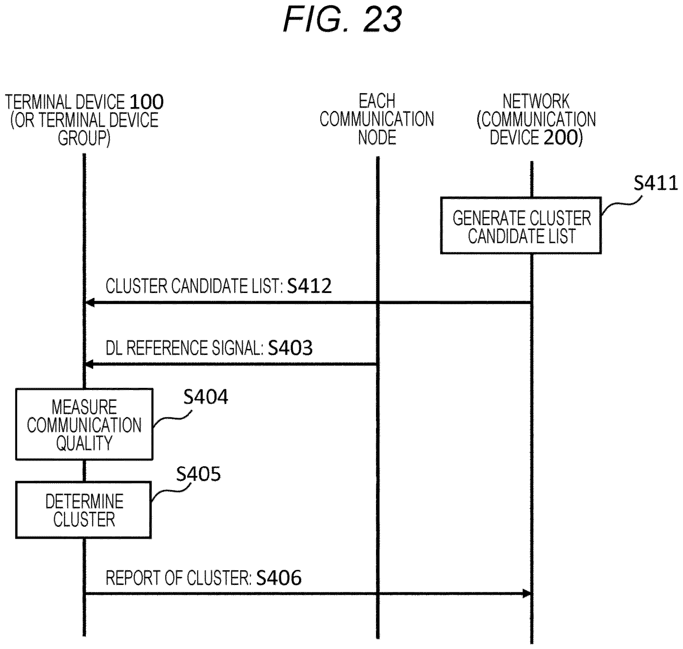

Fig. 23 is a sequence diagram illustrating an example of an operation in which a terminal device determines a cluster.

The communication device 200 in the network generates a cluster candidate list including one or more communication nodes to be clustered (S401). The network sets the cluster candidate list specific to the terminal device or the terminal device group, and transmits the cluster candidate list to the terminal device or the terminal device group (S402). Alternatively, the communication device 200 in the network sets the cluster candidate list specific to the network, and notifies the entire network of the cluster candidate list. Using a network-centric method (the DL-based method or the UL-based method) described above, the network may determine cluster candidates.

The terminal device 100 transmits a DL reference signal to the communication nodes included in the cluster candidate list received from the network (S403), and measures the communication quality of the propagation paths to the communication nodes (S404). The terminal device 100 performs clustering on the basis of the communication quality, and generates a cluster including one or a plurality of communication nodes (S405). The terminal device 100 reports information indicating the determined cluster to the network (S406).

In a case where the clustering to be performed mainly by the terminal device is performed for uplink (UL) transmission, at least either beam control or transmission power control for one or a plurality of communication nodes included in the cluster may be performed by the terminal device.

(2) A terminal device determines a cluster, on the basis of positional information about the terminal device. More specifically, this aspect is as described below.

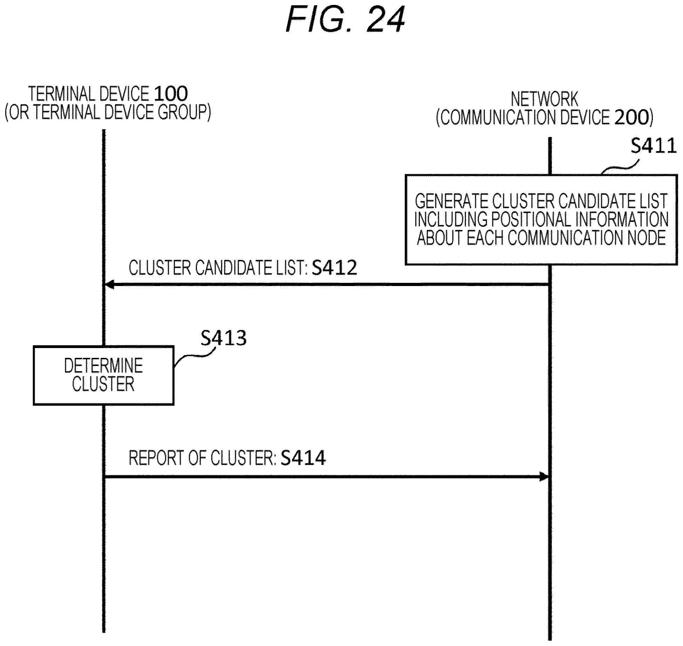

Fig. 24 is a sequence diagram illustrating another example of an operation in which a terminal device determines a cluster.

The communication device 200 in the network generates a cluster candidate list including the one or more communication nodes to be clustered, and positional information about the communication nodes, the cluster candidate list being specific to the terminal device or the terminal device group (S411). The communication device 200 transmits the cluster candidate list to the terminal device 100 or the terminal device group (S412). Alternatively, the communication device 200 in the network sets the cluster candidate list specific to the network, and notifies the entire network of the cluster candidate list.

Using the above-described network-centric method (the DL-based method or the UL-based method), the communication device 200 in the network may determine the one or more communication nodes to be cluster candidates. Also, the terminal device 100 may notify the network of the position of the terminal device, and the network may determine one or more communication nodes to be cluster candidates, on the basis of the positional information.

The terminal device 100 performs clustering on the communication nodes included in the cluster candidate list received from the network, and generates a cluster including one or a plurality of communication nodes (S413). This clustering is performed on the basis of the positional information about the communication nodes included in the cluster candidate list and the position of the terminal device. For example, the terminal device 100 may determine one or a plurality of communication nodes within a predetermined distance from the terminal device as a cluster. The terminal device 100 reports information indicating the determined cluster to the network (S406).

### [Units for Performing Clustering]

Clustering in embodiments of the present disclosure can be individually performed in accordance with units such as situations, conditions, states, functions, or purposes regarding a terminal device. The clustering methods may be different from one another. In the description below, specific examples of units for performing clustering are described.

### <Example 1: Clustering for Each C-plane/U-plane>

In a C-plane, network-centric clustering, a clustering method 1, and/or network (operator)-specific or terminal-device-group-specific clustering is used, for example. As the cluster/subcluster switching method, a semi-static switching method is used, for example.

In a U-plane, terminal-device-centric clustering, a clustering method 2, and/or terminal-device-specific clustering is used, for example. For cluster/subcluster switching, a dynamic switching method is used, for example.

### <Example 2: Clustering for Each Network Function (NF) of the Core Network>

In a user plane function (UPF) and/or a session management function (SMF), terminal-device-centric clustering, a clustering method 2, and/or terminal-device-specific clustering is used, for example. For cluster/subcluster switching, a dynamic cluster/subcluster switching method is used, for example.

In a network slice selection function (NSSF), an authentication server function (AUSF), unified data management (UDM), an access and mobility management function (AMF), and/or a policy control function (PCF), network-centric clustering, a clustering method 1, and/or network (operator)-specific or terminal-device-group-specific clustering is used, for example. As the cluster/subcluster switching method, a semi-static switching method is used, for example.

### <Example 3: Clustering for Each Type of Communication Link>

Clustering is performed for each type of communication link (downlink (DL), uplink (UL), and sidelink (SL), for example). The sidelink is a communication link that is used for direct terminal-to-terminal communication.

For example, in a case where downlink communication is performed, network-centric clustering is used. In a case where UL communication is performed, terminal-device-centric clustering is used. In a case where DL communication is performed, a clustering method 1 is used. In a case where UL communication is performed, a clustering method 2 is used. In a case where DL communication is performed, network (operator)-specific or terminal-device-group-specific clustering is used. In a case where UL communication is performed, terminal-device-specific clustering is used. In a case where DL communication is performed, a semi-static switching method is used as the cluster/subcluster switching method. In a case where UL communication is performed, a dynamic switching method is used as the cluster/subcluster switching method.

In a case where SL communication is performed, a clustering method is determined depending on the transmission mode, for example. Specifically, in mode 1 in which a base station device determines the resource (SL resource) to be used for SL communication, the same clustering as that for DL communication is used. In mode 2 in which a terminal device determines the SL resource on the basis of sensing, the same clustering as that in the case of UL communication is used.

### <Example 4: Clustering Per Network Slicing>

Individual clustering is used for each network slice that is provided on the basis of the concept of network slicing adopted in 5G. In accordance with the network slice to be used, appropriate clustering is selected from among network-centric or terminal-device-centric clustering, clustering methods 1 to 3, and/or network (operator)-specific or terminal-device-group-specific clustering, and the selected clustering is used.

In a wireless communication system that is not a 5G system, such as a New Generation (NG) system, a clustering method to be used can be determined in units of types of communication services.

### <Example 5: Clustering for Each QoS (5G QoS Identifier (5QI)>

A 5QI is an indicator for identifying quality of service (QoS) characteristics, such as priority, packet delay, or packet error rate. Individual clustering is used for each QoS.

In QoS data having a high requirement for low latency or high reliability, terminal-device-centric clustering, a clustering method 2, and/or terminal-device-specific clustering is used, for example. As the cluster/subcluster switching method, a dynamic cluster/subcluster switching method is used, for example.

In QoS data required to achieve connection with multiple terminals at low cost, for example, network-centric clustering, a clustering method 1, and/or network (operator)-specific or terminal-device-group-specific clustering is used, for example. As the cluster/subcluster switching method, a semi-static cluster/subcluster switching method is used, for example.

A 5QI is an example of information for identifying QoS characteristics. For QoS grasped on the basis of information for identifying QoS characteristics in a wireless communication system that is not a 5G system, such as a New Generation (NG) system, it is also possible to determine a clustering method to be used for each type of QoS.

### <Example 6: Clustering for Each Type of Channel/Signal>

Individual clustering is performed for each type of channel/signal.

For a DL channel or a DL signal that is broadcast from a base station, for example, network-centric clustering, a clustering method 1, and/or network (operator)-specific or terminal-device-group-specific clustering is used. As the cluster/subcluster switching method, a semi-static switching method is used, for example.

For a DL channel or a DL signal that is transmitted from a base station uniquely to a terminal device, network-centric clustering, a clustering method 2, and/or terminal-device-specific clustering is used, for example. As the cluster/subcluster switching method, a dynamic switching method is used, for example.

For a UL channel or a UL signal that is transmitted from a terminal device, terminal-device-centric clustering, a clustering method 2, and/or terminal-device-specific clustering is used, for example. As the cluster/subcluster switching method, a dynamic switching method is used, for example.

### <Example 7: Clustering for Each State of a Terminal Device>

Clustering is individually performed in accordance with a state of the terminal device, such as a connected state ("UE_connected", for example), an idle state ("UE_Idle", for example), or an inactive state ("UE_Inactive").

In a connected state, for example, terminal-device-centric clustering, a clustering method 2, and/or terminal-device-specific clustering is used. As the cluster/subcluster switching method, a dynamic switching method is used, for example.

In an idle state, for example, network-centric clustering, a clustering method 1, and/or network (operator)-specific or terminal-device-group-specific clustering is used. As the cluster/subcluster switching method, a semi-static switching method is used, for example.

In an inactive state, for example, network-centric clustering, a clustering method 1, and/or network (operator)-specific or terminal-device-group-specific clustering is used. As the cluster/subcluster switching method, a semi-static switching method is used, for example.

### <Example 8: Clustering for Each Type of Cell>

Clustering is individually performed for each type of cell to be used by a terminal device.

In a case where carrier aggregation (CA) is performed, for example, a primary cell that is a highly reliable cell ensuring connectivity, and a secondary cell that is an accompanying cell are set for the terminal device. The terminal device first connects to the primary cell, and adds the secondary cell as necessary, to obtain an additional radio resource. A carrier serving as a basic unit in carrier aggregation is called a component carrier (CC). The carrier provided by the primary cell is called a primary component carrier (PCC), and the carrier provided by the secondary cell is called a secondary component carrier (SCC).

In a case where carrier aggregation is performed, network-centric clustering, a clustering method 1, and/or network (operator)-specific or terminal-device-group-specific clustering is used in the primary cell, for example. As the cluster/subcluster switching method, a semi-static cluster switching method is used, for example.

In the secondary cell, terminal-device-centric clustering, a clustering method 2, and/or terminal-device-specific clustering is used, for example. As the cluster/subcluster switching method, a dynamic cluster switching method is used, for example.

Dual connectivity (DC) may be used as a system for performing communication using a plurality of cells simultaneously. In the DC, a terminal device simultaneously connects to a master base station and a secondary base station in different frequency bands, and simultaneously uses radio resources provided from these base station devices, to achieve a larger capacity and a higher speed. In the case of DC, a clustering method corresponding to the type can be used for each type of cell (for each type of base station).

As described above, in a case where the terminal device performs communication using a plurality of cells (or a plurality of base station devices) such as CA or DC at the same time, a clustering method can be set for each cell type.

### <Example 9: Clustering for Each Type of Bandwidth Part (BWP)>

Clustering is performed for each type of BWP (default BWP, initial BWP, and other types of BWP). The default BWP is the BWP that returns in a case where a resource is not scheduled for a predetermined time, and specifically, is the BWP that returns when a preset inactivity timer expires. The initial BWP is the BWP to be attached first.

In the default BWP or the initial BWP, for example, network-centric clustering, a clustering method 1, and/or network (operator)-specific or terminal-device-group-specific clustering is used. As the cluster/subcluster switching method, a semi-static switching method is used, for example.

In the types of BWP other than the default BWP and the initial BWP, terminal-device-centric clustering, a clustering method 2, and/or terminal-device-specific clustering is used, for example. As the cluster/subcluster switching method, a dynamic switching method is used, for example.

In a case where a plurality of BWPs is set, clustering for each of the above types is individually performed for each BWP.

### <Example 10: Individual Clustering Depending on the Contents of a Process To Be Performed by a Terminal Device>

Clustering is individually performed in accordance with the contents of a process to be performed by a terminal device. For example, the clustering method is determined in accordance with which process the terminal device is to perform among the initial access, radio resource management (RRM) measurement, and channel state information (CSI) measurement.

In accordance with the contents of the process to be performed by the terminal device, appropriate clustering is selected from among network-centric or terminal-device-centric clustering, clustering methods 1 to 3, and/or network (operator)-specific or terminal-device-group-specific clustering, and the selected clustering is used. Also, as for the cluster/subcluster switching method, an appropriate method is selected between a dynamic switching method and a semi-static switching method, and the selected method is used.

As described above, according to an embodiment of the present disclosure, in a space in which a plurality of communication nodes having small communication coverage are two-dimensionally or three-dimensionally arranged, clustering is performed on a plurality of communication nodes, so that a cluster including one or more communication nodes is generated. By communicating with the cluster, a terminal device can achieve high communication efficiency such as a high speed or a large capacity. In particular, in a case where the communication nodes each include one or more antenna ports, an antenna port set associated with at least two different QCLs is generated as a cluster. As a result, even in a case where the communication status at the one or more antenna ports associated with one QCL is poor, for example, it can be expected that communication is suitably maintained at the one or more antenna ports associated with another QCL, and deterioration in communication quality can be reduced.

Note that the embodiment described above represents an example for embodying the present disclosure, and the present disclosure can be implemented in various other modes. For example, various modifications, substitutions, omissions, or combinations thereof are possible without departing from the gist of the present disclosure. Such modifications, substitutions, omissions, and the like are also included in the scope of the present disclosure, and are similarly included in the inventions disclosed in the claims and the equivalents thereof.

Furthermore, the effects of the present disclosure described in the present specification are merely an example, and other effects may be achieved.

Note that the present disclosure can also have the following configurations.

### [Item 1]

A terminal device capable of communicating with a plurality of communication devices having at least one antenna port,
the terminal device including:
a transceiver; and
a processor, in which
the processor
acquires at least one of first antenna port set information that includes a plurality of first antenna ports associated with at least two different QCLs, or second antenna port set information that includes a plurality of second antenna ports associated with at least two different QCLs, and
transmits or receives at least one of a signal or a channel, on the basis of one of the plurality of first antenna ports included in the first antenna port set information or the plurality of second antenna ports included in the second antenna port set information.

### [Item 2]

The terminal device of item 1, in which
the processor acquires at least one of the first antenna port set information or the second antenna port set information by receiving higher-layer signaling.

### [Item 3]

The terminal device of item 1 or 2, in which
the processor acquires activation information indicating an antenna port to be activated among the plurality of first antenna ports or the plurality of second antenna ports, and
the processor selects at least one antenna port of the plurality of first antenna ports or at least one antenna port of the plurality of second antenna ports on the basis of the activation information, and transmits or receives at least one of the signal or the channel on the basis of the selected at least one antenna port.

### [Item 4]

The terminal device of item 3, in which
the processor acquires the activation information by receiving lower-layer signaling.

### [Item 5]

The terminal device of any one of items 1 to 4, in which
the processor receives control information designating one of the first antenna port set information or the second antenna port set information, and
on the basis of the one of the first antenna port set information and the second antenna port set information designated by the control information, the processor selects one of the plurality of first antenna ports or the plurality of second antenna ports for transmission or reception of at least one of the signal or the channel.

### [Item 6]

The terminal device of item 1, in which
the processor measures communication quality of propagation paths to the plurality of communication devices, determines at least one of the plurality of first antenna ports or the plurality of second antenna ports, and generates at least one of the first antenna port set information or the second antenna port set information.

### [Item 7]

The terminal device of item 1, in which,
on the basis of positional information about the plurality of communication devices, the processor determines at least one of the plurality of first antenna ports or the plurality of second antenna ports, and generates at least one of the first antenna port set information or the second antenna port set information.

### [Item 8]

The terminal device of item 6, in which
the processor performs clustering on the antenna ports in the plurality of communication devices, to determine at least one of the plurality of first antenna ports or the plurality of second antenna ports.

### [Item 9]

A communication device for a terminal device capable of communicating with a plurality of communication devices having at least one antenna port,
the communication device including:
a transceiver; and
a processor, in which
the processor
determines a plurality of first antenna ports associated with at least two different QCLs and a plurality of second antenna ports associated with at least two different QCLs, on the basis of information regarding the plurality of communication devices and the terminal device, and
transmits, to the terminal device, control information designating one of the plurality of first antenna ports or the plurality of second antenna ports as an antenna port for transmitting or receiving at least one of a signal or a channel.

### [Item 10]

The communication device of item 9, in which
the processor
transmits, to the terminal device, first antenna port set information including the plurality of first antenna ports and second antenna port set information including the plurality of second antenna ports,
the control information includes information designating one of the first antenna port set information or the second antenna port set information, and a plurality of antenna ports included in the antenna port set information designated by the information is designated for transmission or reception of at least one of the signal or the channel.

### [Item 11]

The communication device of item 10, in which
the processor transmits at least one of the first antenna port set information or the second antenna port set information by higher-layer signaling.

### [Item 12]

The communication device of any one of items 9 to 11, in which
the processor transmits, to the terminal device, activation information indicating an antenna port to be activated among the plurality of first antenna ports or the plurality of second antenna ports, and designates the antenna port designated by the activation information as an antenna port for transmitting or receiving at least one of the signal or the channel.

### [Item 13]

The communication device of item 12, in which
the processor transmits the activation information by lower-layer signaling.

### [Item 14]

The communication device of any one of items 9 to 13, in which
the processor measures communication quality of propagation paths between the plurality of communication devices and the terminal device, and, on the basis of the communication quality, determines the plurality of first antenna ports and the plurality of second antenna ports.

### [Item 15]

The communication device of any one of items 9 to 14, in which
the processor determines the plurality of first antenna ports and the plurality of second antenna ports, on the basis of positional information about the terminal device and positional information about the plurality of communication devices.

### [Item 16]

The communication device of any one of items 9 to 15, in which
the processor identifies at least two of the terminal devices as a terminal device group on the basis of a condition related to a position, an operation, or a state among a plurality of the terminal devices, and determines the plurality of first antenna ports and the plurality of second antenna ports in common in the terminal device group.

### [Item 17]

The communication device of any one of items 9 to 16, in which
the processor performs clustering on the antenna ports in the plurality of communication devices, to determine the plurality of first antenna ports and the plurality of second antenna ports.

### [Item 18]

The communication device of item 17, in which
the processor performs the clustering individually for each unit of a situation, a condition, a state, a function, or a purpose of the terminal device.

### [Item 19]

A communication method implemented by a terminal device capable of communicating with a plurality of communication devices having at least one antenna port,
the communication method including:
acquiring at least one of first antenna port set information that includes a plurality of first antenna ports associated with at least two different QCLs, or second antenna port set information that includes a plurality of second antenna ports associated with at least two different QCLs; and
transmitting or receiving at least one of a signal or a channel, on the basis of one of the plurality of first antenna ports included in the first antenna port set information or the plurality of second antenna ports included in the second antenna port set information.

### [Item 20]

A communication method for communication with a terminal device capable of communicating with a plurality of communication devices having at least one antenna port,
the communication method including:
determining a plurality of first antenna ports associated with at least two different QCLs and a plurality of second antenna ports associated with at least two different QCLs, on the basis of information regarding the plurality of communication devices and the terminal device; and
transmitting, to the terminal device, control information designating one of the plurality of first antenna ports or the plurality of second antenna ports as an antenna port for transmitting or receiving at least one of a signal or a channel.

### REFERENCE SIGNS LIST

- 11 to 21: Communication device (communication node)
- 11A to 11D: Antenna (antenna port)
- 12A to 12D: Antenna (antenna port)
- 13A, 13B: Antenna (antenna port)
- 14A, 14B: Antenna (antenna port)
- 31: Core network
- 41: Internet
- 100: Terminal device
- 110: Antenna
- 120: Wireless communication unit
- 121: Signal transmission unit
- 122: Signal reception unit
- 140: Storage unit
- 150: Control unit
- 151: Transmission unit
- 152: Reception unit
- 200: Communication device (base station device)
- 210: Antenna
- 220: Wireless communication unit
- 221: Signal transmission unit
- 222: Signal reception unit
- 230: Network communication unit
- 240: Storage unit
- 250: Control unit
- 251: Transmission unit
- 252: Reception unit

## Claims

1. A terminal device capable of communicating with a plurality of communication devices having at least one antenna port,
the terminal device comprising:
a transceiver; and
a processor, wherein
the processor
acquires first antenna port set information that includes a plurality of first antenna ports associated with at least two different QCLs, and second antenna port set information that includes a plurality of second antenna ports associated with at least two different QCLs, and
transmits or receives at least one of a signal or a channel, on a basis of one of the plurality of first antenna ports included in the first antenna port set information or the plurality of second antenna ports included in the second antenna port set information.

2. The terminal device according to claim 1, wherein
the processor acquires at least one of the first antenna port set information or the second antenna port set information by receiving higher-layer signaling.

3. The terminal device according to claim 1, wherein
the processor acquires activation information indicating an antenna port to be activated among the plurality of first antenna ports or the plurality of second antenna ports, and
the processor selects at least one antenna port of the plurality of first antenna ports or at least one antenna port of the plurality of second antenna ports on a basis of the activation information, and transmits or receives at least one of the signal or the channel on a basis of the selected at least one antenna port.

4. The terminal device according to claim 3, wherein
the processor acquires the activation information by receiving lower-layer signaling.

5. The terminal device according to claim 1, wherein
the processor receives control information designating one of the first antenna port set information or the second antenna port set information, and
on a basis of the one of the first antenna port set information and the second antenna port set information designated by the control information, the processor selects one of the plurality of first antenna ports or the plurality of second antenna ports for at least one of the signal or the channel.

6. The terminal device according to claim 1, wherein
the processor measures communication quality of a propagation path to the plurality of communication devices, determines at least one of the plurality of first antenna ports or the plurality of second antenna ports on a basis of the communication quality, and generates at least one of the first antenna port set information or the second antenna port set information.

7. The terminal device according to claim 1, wherein,
on a basis of positional information about the plurality of communication devices, the processor determines at least one of the plurality of first antenna ports or the plurality of second antenna ports, and generates at least one of the first antenna port set information or the second antenna port set information.

8. The terminal device according to claim 6, wherein
the processor performs clustering on the antenna ports in the plurality of communication devices, to determine at least one of the plurality of first antenna ports or the plurality of second antenna ports.

9. A communication device for a terminal device capable of communicating with a plurality of communication devices having at least one antenna port,
the communication device comprising:
a transceiver; and
a processor, wherein
the processor
determines a plurality of first antenna ports associated with at least two different QCLs and a plurality of second antenna ports associated with at least two different QCLs, on a basis of information regarding the plurality of communication devices and the terminal device, and
transmits, to the terminal device, control information designating one of the plurality of first antenna ports or the plurality of second antenna ports as an antenna port for transmitting or receiving at least one of a signal or a channel.

10. The communication device according to claim 9, wherein
the processor
transmits, to the terminal device, first antenna port set information including the plurality of first antenna ports and second antenna port set information including the plurality of second antenna ports,
the control information includes information designating one of the first antenna port set information or the second antenna port set information, and a plurality of antenna ports included in the antenna port set information designated by the information is designated as an antenna port for transmission or reception of at least one of the signal or the channel.

11. The communication device according to claim 10, wherein
the processor transmits at least one of the first antenna port set information or the second antenna port set information by higher-layer signaling.

12. The communication device according to claim 9, wherein
the processor transmits, to the terminal device, activation information indicating an antenna port to be activated among the plurality of first antenna ports or the plurality of second antenna ports, and designates the antenna port designated by the activation information as an antenna port for transmitting or receiving at least one of the signal or the channel.

13. The communication device according to claim 12, wherein
the processor transmits the activation information by lower-layer signaling.

14. The communication device according to claim 9, wherein
the processor measures communication quality of a propagation path between the plurality of communication devices and the terminal device, and, on a basis of the communication quality, determines the plurality of first antenna ports and the plurality of second antenna ports.

15. The communication device according to claim 9, wherein
the processor determines the plurality of first antenna ports and the plurality of second antenna ports, on a basis of positional information about the terminal device and positional information about the plurality of communication devices.

16. The communication device according to claim 9, wherein
the processor identifies at least two of the terminal devices as a terminal device group on a basis of a condition related to a position, an operation, or a state among a plurality of the terminal devices, and determines the plurality of first antenna ports and the plurality of second antenna ports in common in the terminal device group.

17. The communication device according to claim 9, wherein
the processor performs clustering on the antenna ports in the plurality of communication devices, to determine the plurality of first antenna ports and the plurality of second antenna ports.

18. The communication device according to claim 17, wherein
the processor performs the clustering individually for each unit of a situation, a condition, a state, a function, or a purpose of the terminal device.

19. A communication method implemented by a terminal device capable of communicating with a plurality of communication devices having at least one antenna port,
the communication method comprising:
acquiring first antenna port set information that includes a plurality of first antenna ports associated with at least two different QCLs, and second antenna port set information that includes a plurality of second antenna ports associated with at least two different QCLs; and
transmitting or receiving at least one of a signal or a channel, on a basis of one of the plurality of first antenna ports included in the first antenna port set information or the plurality of second antenna ports included in the second antenna port set information.

20. A communication method for communication with a terminal device capable of communicating with a plurality of communication devices having at least one antenna port,
the communication method comprising:
determining a plurality of first antenna ports associated with at least two different QCLs and a plurality of second antenna ports associated with at least two different QCLs, on a basis of information regarding the plurality of communication devices and the terminal device; and
transmitting, to the terminal device, control information designating one of the plurality of first antenna ports or the plurality of second antenna ports as an antenna port for transmitting or receiving at least one of a signal or a channel.
